# EUROPÄISCHE PATENTANMELDUNG

(11) **EP 4 733 800 A1**
(43) Veröffentlichungstag der Anmeldung: **29.04.2026**
(21) Anmeldenummer: 25210250.4
(22) Anmeldetag: 22.10.2025
(51) Int. Cl.: G01S 7/41, G01S 7/35, G01S 13/931, G06V 10/82

(54) **RADARSYSTEM ZUM ERMITTELN EINER ANZAHL VON OBJEKTEN IN EINER UMGEBUNG EINES FAHRZEUGS IN ABHÄNGIGKEIT VON MITHILFE EINES BILDES DARGESTELLTEN PHASENINFORMATIONEN VON 5 EMPFANGSSIGNALEN**

(30) Priorität: 22.10.2024 DE 102024130756
(71) Anmelder: Valeo Schalter und Sensoren GmbH, 74321 Bietigheim-Bissingen (DE)
(72) Erfinder: SCHOLZ, Niko, 96317 Kronach Neuses (DE); POEPPERL, Maximilian, 96317 Kronach Neuses (DE); KUMAR, Sandeep, 96317 Kronach Neuses (DE); LUKIN, Artem, 96317 Kronach Neuses (DE); JENKINS, Alan, 96317 Kronach Neuses (DE)
(74) Vertreter: Valeo Schalter und Sensoren

(57) **Zusammenfassung**

Offenbart ist ein Radarsystem (3) zur Erfassung einer Anzahl von Objekten in einer Umgebung eines Fahrzeugs in Abhängigkeit von mithilfe eines Bildes (1001) darstellbaren Phaseninformationen von Empfangssignalen unter Verwendung eines neuronalen Netzes (1), wobei Leistungsspektren (10) in Abhängigkeit von den mittels Empfangsantennen (11) erzeugten Empfangssignalen erzeugt werden und Range-Doppler-Paare der Leistungsspektren ausgewählt werden und das jeweilige Leistungsspektrum zumindest eine Phaseninformation des ausgewählten Range-Doppler-Paares umfasst und das Bild (1001) in Abhängigkeit von den Phaseninformationen generiert wird.

## Beschreibung

### GEBIET DER TECHNIK

Die Erfindung betrifft ein Radarsystem zum Erfassen von Objekten. Darüber hinaus betrifft die Erfindung ein Verfahren zum Erfassen von Objekten mithilfe eines Radarsystems.

### STAND DER TECHNIK

Die DE 10 2020 201 025 A1 beschreibt einen Radarsensor mit mehreren Empfangsantennen und mehreren Sendeantennen, die auf einer Leiterplatte angeordnet sind. Ein großer Teil der Sendeantennen ist an unterschiedlichen Positionen in Bezug auf eine erste Achse und an derselben Position in Bezug auf eine zweite Achse, die orthogonal zur ersten Achse ist, angeordnet. Ein Teil der Empfangsantennen ist an unterschiedlichen Positionen in Bezug auf die erste Achse und an derselben Position in Bezug auf die zweite Achse angeordnet.

### ZUSAMMENFASSUNG

Aufgabe ist es, ein verbessertes Radarsystem zur Erfassung von Objekten und ein verbessertes Verfahren zum Erfassen von Objekten mithilfe eines Radarsystems bereitzustellen. Die der Erfindung zugrunde liegenden Aufgaben werden durch die Merkmale der unabhängigen Ansprüche gelöst.

Es wird ein Radarsystem zur Erfassung von Objekten in einer Umgebung eines Fahrzeugs vorgeschlagen. Das Radarsystem umfasst eine Auswerteeinheit mit einem trainierten neuronalen Netz. Die Auswerteeinheit ist eingerichtet, Leistungsspektren in Abhängigkeit von mittels Empfangsantennen erzeugten Empfangssignalen zu generieren. Erste Frequenzen des jeweiligen Leistungsspektrums repräsentieren Abstände der Objekte in Bezug zu den Empfangsantennen. Zweite Frequenzen des jeweiligen Leistungsspektrums repräsentieren relative Geschwindigkeiten der Objekte in Bezug zu den Empfangsantennen.

Weiterhin ist die Auswerteeinheit eingerichtet, für das jeweilige Leistungsspektrum ein Frequenzpaar auszuwählen. Die ausgewählten Frequenzpaare der Leistungsspektren umfassen jeweils eine Frequenz der ersten Frequenzen, die in einem ersten Frequenzbereich liegt, und eine Frequenz der zweiten Frequenzen, die in einem zweiten Frequenzbereich liegt. Der erste Frequenzbereich repräsentiert einen Bereich der Abstände. Der zweite Frequenzbereich repräsentiert einen Bereich der relativen Geschwindigkeiten. Das jeweilige Leistungsspektrum umfasst zumindest eine Phaseninformation des ausgewählten Frequenzpaares des jeweiligen Leistungsspektrums.

Weiterhin ist die Auswerteeinheit eingerichtet, Pixelwerte von Pixeln eines Bildes in Abhängigkeit von den Phaseninformationen der ausgewählten Frequenzpaare zu berechnen. Weiterhin ist die Auswerteeinheit eingerichtet, unter Verwendung des Bildes als Eingabe für das neuronale Netz mithilfe des neuronalen Netzes eine Ausgabe des neuronalen Netzes zu berechnen und anhand der Ausgabe eine Anzahl von Objekten einer Teilmenge der Objekte zu ermitteln. Die Teilmenge der Objekte weisen jeweils einen Abstand in Bezug zu dem Radarsystem, der innerhalb des Bereichs der Abstände liegt, und eine relative Geschwindigkeit in Bezug zu dem Radarsystem auf, die innerhalb des Bereichs der relativen Geschwindigkeiten liegt.

In einem weiteren Aspekt ist ein Verfahren zur Erfassung von Objekten in einer Umgebung eines Fahrzeugs mithilfe eines Radarsystems mit einer Auswerteeinheit und mithilfe eines trainierten neuronalen Netzes der Auswerteeinheit offenbart. Das Verfahren umfasst ein Generieren von Leistungsspektren in Abhängigkeit von mittels Empfangsantennen erzeugten Empfangssignalen, wobei erste Frequenzen des jeweiligen Leistungsspektrums Abstände der Objekte in Bezug zu den Empfangsantennen repräsentieren und zweite Frequenzen des jeweiligen Leistungsspektrums relative Geschwindigkeiten der Objekte in Bezug zu den Empfangsantennen repräsentieren. Weiterhin umfasst das Verfahren ein Auswählen eines Frequenzpaares für das jeweilige Leistungsspektrum. Die ausgewählten Frequenzpaare der Leistungsspektren umfassen jeweils eine Frequenz der ersten Frequenzen, die in einem ersten Frequenzbereich liegt, und eine Frequenz der zweiten Frequenzen, die in einem zweiten Frequenzbereich liegt. Der erste Frequenzbereich repräsentiert einen Bereich der Abstände und der zweite Frequenzbereich einen Bereich der relativen Geschwindigkeiten. Das jeweilige Leistungsspektrum umfasst zumindest eine Phaseninformation des ausgewählten Frequenzpaares des jeweiligen Leistungsspektrums.

Weiterhin umfasst das Verfahren ein Berechnen von Pixelwerten von Pixeln eines Bildes in Abhängigkeit von den Phaseninformationen der ausgewählten Frequenzpaare. Weiterhin umfasst das Verfahren ein Berechnen einer Ausgabe des neuronalen Netzes mithilfe des neuronalen Netzes unter Verwendung des Bildes als Eingabe für das neuronale Netz. Weiterhin umfasst das Verfahren ein Ermitteln einer Anzahl von Objekten einer Teilmenge der Objekte, die jeweils einen Abstand in Bezug zu dem Radarsystem, der innerhalb des Bereichs der Abstände liegt, und eine relative Geschwindigkeit in Bezug zu dem Radarsystem, die innerhalb des Bereichs der relativen Geschwindigkeiten liegt, aufweisen.

Es versteht sich, dass seine oder mehrere der vorgenannten Ausführungsformen miteinander kombiniert werden können, solange sich die Ausführungsformen nicht gegenseitig ausschließen.

### KURZE BESCHREIBUNG DER ZEICHNUNGEN

Im Folgenden werden Beispiele anhand der Zeichnungen näher erläutert. Es zeigen:
Fig. 1 ein Radarsystem mit einer Auswerteeinheit mit einem neuronalen Netz,
Fig. 2 ein Flussdiagramm zur Darstellung einer Ermittlung einer Anzahl von Objekten in einer Umgebung eines Fahrzeugs in Abhängigkeit von einem Bild mit Phaseninformationen von Empfangssignalen,
Fig. 3 ein Flussdiagramm zur Darstellung einer Erzeugung von Leistungsspektren in Abhängigkeit von mithilfe von Empfangsantennen erzeugten Empfangssignalen,
Fig. 4 ein beispielhaftes Leistungsspektrum der in Figur 3 gezeigten Leistungsspektren,
Fig. 5 ein Fahrzeug mit dem in Figur 1 gezeigten Radarsystem und zwei Objekte in einer Umgebung des Fahrzeugs,
Fig. 6 ein Flussdiagramm zur Veranschaulichung einer Berechnung eines Winkelspektrums in Abhängigkeit von Phaseninformationen der in Figur 3 gezeigten Leistungsspektren,
Fig. 7 eine in Abhängigkeit von den Phaseninformationen der in Figur 3 gezeigten Leistungsspektren erzeugte erste Variante des in Figur 2 gezeigten Bildes,
Fig. 8 eine in Abhängigkeit von den Phaseninformationen der in Figur 3 gezeigten Leistungsspektren erzeugte zweite Variante des in Figur 2 gezeigten Bildes,
Fig. 9 eine in Abhängigkeit von den Phaseninformationen der in Figur 3 gezeigten Leistungsspektren erzeugte dritte Variante des in Figur 2 gezeigten Bildes,
Fig. 10 ein Flussdiagramm zur Darstellung eines Trainings des in Figur 1 und Figur 2 gezeigten neuronalen Netzes.

### DETAILLIERTE BESCHREIBUNG

Im Folgenden werden einander ähnliche Elemente mit den gleichen Bezugszeichen gekennzeichnet.

Dadurch, dass mithilfe des vorgeschlagenen Radarsystems die Anzahl derjenigen Objekte ermittelt werden kann, die jeweils einen Abstand in Bezug zu dem Radarsystem, der innerhalb des Bereichs der Abstände liegt, und eine relative Geschwindigkeit in Bezug zu dem Radarsystem, die innerhalb des Bereichs der relativen Geschwindigkeiten liegt, aufweisen, d.h. die Anzahl der Objekte der Teilmenge ermittelt werden kann, könnte es möglich sein, eine Verkehrssituation, in der sich das Fahrzeug befindet, genauer zu erfassen. Die Objekte der Teilmenge werden im Folgenden als Untersuchungsobjekte bezeichnet.

Die Ausgabe des neuronalen Netzes kann zumindest eine Information aufweisen, anhand welcher die Auswerteeinheit die Anzahl der Untersuchungsobjekte ermitteln kann. Beispielsweise kann die Ausgabe die Anzahl der Untersuchungsobjekte und einen Wahrscheinlichkeitswert für die in der Ausgabe angegebene Anzahl der Untersuchungsobjekte aufweisen. Möglich ist weiterhin, dass die Ausgabe mehrere unterschiedliche Zahlen aufweist, die jeweils die Anzahl der Untersuchungsobjekte angeben, und die Ausgabe für jede der Zahlen einen jeweiligen Wahrscheinlichkeitswert aufweist. In diesem Fall kann die Auswerteeinheit eingerichtet sein, anhand der unterschiedlichen Zahlen und deren Wahrscheinlichkeitswerten die Anzahl der Untersuchungsobjekte, beispielsweise durch eine Gewichtung der jeweiligen Zahl mit dem jeweiligen Wahrscheinlichkeitswerte, zu bestimmen. Im letzten Fall kann die Ausgabe als eine Ausgabe eines Klassifizierungsalgorithmus verstanden werden, wobei die Ausgabe mithilfe der Wahrscheinlichkeitswerte Wahrscheinlichkeiten für unterschiedliche Klassen angibt. Zu jeder Klasse ist hierbei eine Anzahl der Untersuchungsobjekte zugeordnet.

Gemäß einer Variante kann das Radarsystem eine Ausgabeeinheit umfassen, mit welcher die Anzahl der Untersuchungsobjekte für einen Fahrer des Fahrzeugs wahrnehmbar ausgegeben werden kann. Beispielsweise kann die Ausgabeeinheit in Form eines Displays ausgebildet sein, auf welchem die Anzahl der Untersuchungsobjekte anzeigbar ist. Bei dieser Variante kann der Fahrer selbst die Verkehrssituation anhand der angegebenen Anzahl der Untersuchungsobjekte erfassen. In den meisten Anwendungsfällen befinden sich die Untersuchungsobjekte vor dem Fahrzeug. Eine Information darüber, wie viele Untersuchungsobjekte sich vor dem Fahrzeug befinden, könnte eine Sicherheit des Fahrers erhöhen.

Gemäß einer weiteren möglichen Anwendung kann die Auswerteeinheit eingerichtet sein, anhand der ermittelten Anzahl der Untersuchungsobjekte weitere Berechnungen durchzuführen, deren Ergebnisse weitere Informationen über die Verkehrssituation enthalten können. Die weiteren Informationen können beispielweise Winkel der Untersuchungsobjekte in Bezug zu den Empfangsantennen umfassen. In diesem Fall kann eine Ermittlung der Anzahl der Untersuchungsobjekte als eine Vorstufe der weiteren Berechnungen verstanden werden. Möglich ist, dass die weiteren Berechnungen eine Angabe über die Anzahl der Untersuchungsobjekte voraussetzen oder, dass eine Genauigkeit der weiteren Berechnungen unter Verwendung der Angabe über die Anzahl erhöht werden kann. Dies kann zum Beispiel dann der Fall sein, wenn die weiteren Berechnungen eine Durchführung des MUSIC- oder des ESPRIT-Algorithmus umfassen.

In den oben genannten Fällen, bei denen anhand der ermittelten Anzahl der Untersuchungsobjekte die Verkehrssituation erfasst werden kann, könnte eine Sicherheit des Radarsystems und damit des Fahrzeugs, für den Fall, dass das Radarsystem Teil des Fahrzeugs ist, erhöht werden.

Das Bild als Eingabe für das neuronale Netz (NN) zu verwenden könnte den Vorteil haben, dass eine Struktur des NN verwendet werden kann, die aus dem Gebiet der "Computervision", insbesondere aus dem Gebiet der Mustererkennung unter Verwendung von Bildern mithilfe von NNs, aus der Wissenschaft bekannt ist. Beispielsweise kann die Struktur des NN, d.h. eine vorgegebene Anzahl von Schichten des NNs und eine jeweils vorgegebene Anzahl von Neuronen in jeder der Schichten und ein vorgegebener Typ des jeweiligen Neurons, die Struktur des ResNet18 aufweisen. Die Struktur des ResNet18 weist als Eingabeschicht eine 7x7 Convolutional-Schicht mit 64 Filtern und eine Max-Pooling-Schicht auf. Weiterhin umfasst das ResNet18 einen ersten Residualblock mit zwei 3x3 Convolutional-Schichten mit jeweils 64 Filtern, einen zweiten Residualblock mit zwei 3x3 Convolutional-Schichten mit jeweils 128 Filtern, einen dritten Residualblock mit zwei 3x3 Convolutional-Schichten mit jeweils 256 Filtern, einen vierten Residualblock mit zwei 3x3 Convolutional-Schichten mit jeweils 512 Filtern, eine anschließende Schicht, die eingerichtet ist, ein globales Pooling durchzuführen und eine Abschlussschicht, die eingerichtet ist, auf Basis eines Ergebnisses des Poolings eine Klassifizierung durchzuführen.

ResNet18 ist im Vergleich zu größeren Modellen wie ResNet50 oder ResNet101 kompakter und schneller, aber trotzdem vergleichsweise leistungsfähig. Das ResNet18 wird häufig als Basisarchitektur in Bildklassifizierungsaufgaben eingesetzt, da es eine gute Balance zwischen Komplexität und Genauigkeit bietet.

Bei dem vorgeschlagenen Radarsystem weist die Auswerteeinheit das NN in einem trainierten Zustand auf. Bei einem Training werden Verbindungsgewichte des NN in Abhängigkeit von Trainingsdaten verändert, um die Verbindungsgewichte an die Trainingsdaten anzupassen. Um das NN zu erzeugen, können gemäß einer Variante die oben genannte Struktur des ResNet18 als Struktur des NN verwendet werden und die Verbindungsgewichte in Abhängigkeit der Trainingsdaten angepasst werden.

Um die Pixelwerte der Pixel des Bildes in Abhängigkeit von den Phaseninformationen der ausgewählten Frequenzpaare zu berechnen, kann in der Auswerteeinheit ein Transformationsalgorithmus implementiert sein. Eine Position des jeweiligen Pixels des Bildes kann durch einen Wert einer ersten Koordinate und einen Wert einer zweiten Koordinate spezifiziert sein. Die erste Koordinate kann als x-Achse und die zweite Koordinate als γ-Achse des Bildes betrachtet werden.

Gemäß einer möglichen Ausgestaltung kann die Auswerteeinheit eingerichtet sein, bei einer Durchführung des Transformationsalgorithmus die Pixelwerte des jeweiligen Pixels, der durch seine Position in dem Bild spezifiziert ist, in Abhängigkeit eines jeweiligen Teils der Phaseninformationen der ausgewählten Frequenzpaare zu berechnen. Der Transformationsalgorithmus kann hierbei eine feste Zuordnung zwischen einem jeweiligen Teil der Phaseninformationen der ausgewählten Frequenzpaare und dem jeweiligen Pixel aufweisen. Die feste Zuordnung kann von einer räumlichen Verteilung der Empfangsantennen zueinander abhängen.

Dadurch, dass mithilfe des vorgeschlagenen Radarsystems die Pixelwerte in Abhängigkeit von den Phaseninformationen berechnet werden können, könnten zusätzliche Informationen in Form der Phaseninformationen im Vergleich zu einer Variante, bei welcher nur Intensitätswerte der Leistungsspektren für eine Berechnung der Pixelwerte herangezogen werden, für eine Erstellung des Bildes als Eingabe für das NN verwendet werden. Eine derartige Verwendung der zusätzlichen Informationen könnte eine Genauigkeit des NNs bei einer Ermittlung der Anzahl der Untersuchungsobjekte erhöhen. Insbesondere können relative Veränderungen der Phaseninformationen in vielen Fällen deutlich größer als relative Veränderungen der Intensitätswerte, insbesondere bei kleinen Veränderungen der Abstände oder der Geschwindigkeiten, sein. Mit anderen Worten können die Phaseninformationen in vielen Anwendungsfällen gegenüber kleinen Veränderungen der Abstände oder der Geschwindigkeiten sensitiver als die Intensitätswerte sein. Die Phaseninformationen zur Ermittlung der Anzahl der Untersuchungsobjekte zu nutzen könnte insbesondere dann von Vorteil sein, wenn die Untersuchungsobjekte sehr dicht zueinander angeordnet sind und ähnliche Geschwindigkeiten und ähnliche Entfernungen zu dem Radarsystem aufweisen. Es konnte beispielsweise beobachtet werden, dass eine geringe Bewegung, z. B. um einen Zentimeter eines der Objekte, eine starke Änderung, z. B. um 180 Grad, der Phaseninformation einer der ausgewählten Frequenzpaare verursachen kann.

In den meisten Anwendungsfällen ist die Auswerteeinheit eingerichtet, das jeweilige Leistungsspektrum in Form eines 2-dimensionalen Leistungsspektrums zu erzeugen. Eine erste Dimension des jeweiligen Leistungsspektrums, im Folgenden auch abgekürzt als Spektrum bezeichnet, kann hierbei die ersten Frequenzen des jeweiligen Spektrums darstellen, die sich auf die oben genannten Abstände der Objekte beziehen. Eine zweite Dimension des jeweiligen Spektrums kann die zweiten Frequenzen darstellen, die sich auf die oben genannten relativen Geschwindigkeiten Objekte beziehen. Die zweiten Frequenzen können als Dopplerfrequenzen betrachtet werden. Das jeweilige Spektrum kann daher als ein jeweiliges Entfernungs-Doppler-Spektrum betrachtet werden. Ein jeweiliges Frequenzpaar des jeweiligen Spektrums, welches eine der ersten Frequenzen und eine der zweiten Frequenzen des jeweiligen Spektrums aufweist, kann als ein jeweiliges Entfernungs-Doppler-Paar des jeweiligen Spektrums betrachtet werden. Das jeweilige Spektrum ordnet jedem Frequenzpaar des jeweiligen Spektrums einen jeweiligen Leistungs- oder Intensitätswert und eine Phaseninformation zu.

Obwohl die Empfangsantennen räumlich voneinander getrennt sind, wird für eine Berechnung der Spektren ein Abstand des jeweiligen Objekts zu der jeweiligen Empfangsantenne als annähernd gleich angenommen. Dies ist darauf zurückzuführen, dass die Abstände der Objekte zu den Empfangsantennen viel größer als der Abstand zwischen den Empfangsantennen sind. Dasselbe gilt für die relativen Geschwindigkeiten der Objekte. Die Relativgeschwindigkeiten der Objekte in Bezug auf die jeweilige Empfangsantenne können als annähernd gleich betrachtet werden. Daher können die Leistungsspektren einander ähnlich oder gleich sein, mit Ausnahme der Phaseninformation des jeweiligen Frequenzpaares des jeweiligen Spektrums.

Die oben erwähnte Auswahl des Frequenzpaares für das jeweilige Spektrum kann zunächst eine Auswahl eines Frequenzpaares eines ausgewählten Spektrums der Spektren umfassen, das im Folgenden als ausgewähltes Frequenzpaar bezeichnet wird. Nach einer Variante kann das ausgewählte Spektrum zufällig ausgewählt werden.

Gemäß einer möglichen Ausgestaltung kann die Auswerteeinheit eingerichtet sein, das ausgewählte Frequenzpaar als dasjenige Frequenzpaar des ausgewählten Spektrums zu bestimmen, das den höchsten Leistungs- oder Intensitätswert aufweist. Gemäß einer möglichen Variante kann das ausgewählte Frequenzpaar des jeweiligen Spektrums gleich dem ausgewählten Frequenzpaar des ausgewählten Spektrums sein. Es ist möglich, dass das ausgewählte Frequenzpaar des jeweiligen Spektrums dasjenige Frequenzpaar ist, dessen Leistungs- oder Intensitätswert von allen Frequenzpaaren des jeweiligen Spektrums, insbesondere unter Berücksichtigung einer vorgegebenen Toleranz, am höchsten ist. Dies kann darauf zurückzuführen sein, dass das ausgewählte Frequenzpaar in Bezug auf die Leistungswerte oder Intensitätswerte der Frequenzpaare des ausgewählten Spektrums ausgewählt wird, und, dass die Spektren bis auf die Phaseninformation der Frequenzpaare, wie oben beschrieben, untereinander ähnlich oder gleich sein können. Ist das ausgewählte Frequenzpaar des jeweiligen Spektrums gleich dem ausgewählten Frequenzpaar des ausgewählten Spektrums, so ist eine obere Grenze des ersten Frequenzbereiches gleich einer unteren Grenze des ersten Frequenzbereiches und eine obere Grenze des zweiten Frequenzbereiches gleich einer unteren Grenze des zweiten Frequenzbereiches.

Gemäß einer alternativen Variante kann die Auswerteeinheit eingerichtet sein, ausgehend von dem ausgewählten Frequenzpaar des ausgewählten Spektrums einen zweidimensionalen Toleranzbereich zu bestimmen, in welchem die ausgewählten Frequenzpaare der übrigen Spektren liegen sollen. Die übrigen Spektren umfassen die oben genannten Spektren mit Ausnahme des ausgewählten Spektrums. Der zweidimensionale Toleranzbereich, im Folgenden verkürzt als Toleranzbereich bezeichnet, kann durch eine untere Grenze und eine obere Grenze der ersten Frequenzen und eine untere Grenze und eine obere Grenze der zweiten Frequenzen spezifiziert sein. Die Auswerteeinheit kann eingerichtet sein, die untere Grenze und die obere Grenze der ersten Frequenzen und die untere Grenze und die obere Grenze der zweiten Frequenzen unter Verwendung eines vorgegebenen Toleranzmaßes, wie beispielsweise 1 Prozent, in Abhängigkeit von der ersten Frequenz und der zweiten Frequenz des ausgewählten Frequenzpaares des ausgewählten Spektrums zu bestimmen. In diesem Fall können die untere Grenze und die obere Grenze der ersten Frequenzen Grenzen des oben genannten ersten Frequenzbereiches sein. Analog können die untere Grenze und die obere Grenze der zweiten Frequenzen Grenzen des oben genannten zweiten Frequenzbereiches sein.

Gemäß einer möglichen Ausgestaltung kann die Auswerteeinheit eingerichtet sein, das ausgewählten Frequenzpaar des jeweiligen Spektrums der übrigen Spektren als dasjenige Frequenzpaar des jeweiligen Spektrums zu bestimmen, welches innerhalb des Toleranzbereiches liegt und den höchsten Leistungs- oder Intensitätswert aufweist.

Dadurch, dass die ersten Frequenzen die Abstände der Objekte repräsentieren und die zweiten Frequenzen die relativen Geschwindigkeiten der Objekte repräsentieren, repräsentiert der erste Frequenzbereich denjenigen Bereich der Abstände, in dem die Abstände der Untersuchungsobjekte liegen, und der zweite Frequenzbereich denjenigen Bereich der relativen Geschwindigkeiten, in dem die relativen Geschwindigkeiten der Untersuchungsobjekte liegen.

Der Toleranzbereich wird häufig als "range-Doppler-bin" bezeichnet, da der erste Frequenzbereich einen Bereich von möglichen Abständen der Untersuchungsobjekte und der zweite Frequenzbereich einen Bereich von möglichen relativen Geschwindigkeiten der Untersuchungsobjekte, die anhand von ermittelten Dopplergeschwindigkeiten berechnet werden können, angeben.

Im Folgenden wird eine mögliche Variante beschrieben, wie die Auswerteeinheit die Spektren in Abhängigkeit der Empfangssignale genieren kann.

Das Radarsystem kann eine Steuereinheit zur Steuerung von Sendeantennen des Radarsystems umfassen, um Radarsignale in Abhängigkeit von Sendesignalen zu senden. Die jeweilige Sendeantenne kann das jeweilige Radarsignal in Abhängigkeit von dem jeweiligen Sendesignal aussenden. Gemäß eines Beispiels können sich die Sendesignale voneinander unterscheiden, zum Beispiel hinsichtlich ihrer Phase.

Das Radarsystem kann die oben genannten Empfangsantennen umfassen. Die jeweilige Empfangsantenne kann ausgebildet sein, in Reaktion auf ein Empfangen von reflektierten Radarsignalen ein jeweiliges Empfangssignal der Empfangssignale zu erzeugen. Die reflektierten Radarsignale können aus Reflexionen der gesendeten Radarsignale an den Objekten resultieren. Gemäß eines Beispiels kann das jeweilige reflektierte Radarsignal aus Reflektionen der Radarsignale an dem jeweiligen Objekt resultieren.

Die Steuereinheit kann eingerichtet sein, die Sendeantennen und die Empfangsantennen in einem MIMO-Modus (Multiple Input/Multiple Output Mode) zu betreiben. Ein Betrieb der Sendeantennen und der Empfangsantennen im MIMO-Modus kann umfassen, dass jede Empfangsantenne die reflektierten Radarsignale empfängt und dass die reflektierten Radarsignale von der Auswerteeinheit unterschieden werden können. Um dies zu realisieren, kann die Steuereinheit ausgebildet sein, die Sendesignale als kodierte Signale zu erzeugen. Beispielsweise kann die Steuereinheit eingerichtet sein, ein Zeitmultiplexverfahren und/oder eine binäre Phasenmodulation zur Kodierung der Sendesignale und damit der Radarsignale durchzuführen. Die Kodierung kann ermöglichen, dass die Auswerteeinheit bei der Verarbeitung der Empfangssignale die verschiedenen Empfangssignale und damit die reflektierten Radarsignale voneinander unterscheiden kann.

Mithilfe des MIMO-Verfahrens kann ein virtuelles Antennenfeld mit virtuellen Empfangsantennen, im Folgenden auch als virtuelle Kanäle bezeichnet, erzeugt werden. Die Abstände zwischen den virtuellen Empfangsantennen innerhalb des virtuellen Antennenfeldes können durch eine Faltung der relativen Abstände zwischen den Sendeantennen und den Empfangsantennen ermittelt werden.

Gemäß eines Beispiels kann das Radarsystem Mischungsmodule umfassen. Die Mischungsmodule können eingerichtet sein, jedes Sendesignal mit jedem Empfangssignal zu mischen, um innerhalb eines Betriebszeitintervalls gemischte Signale zu erzeugen. Jedem gemischten Signal kann einer der virtuellen Kanäle zugeordnet werden. Beispielsweise können für den Fall, dass das Radarsystem vier Sendeantennen und vier Empfangsantennen aufweist, mithilfe der Mischungsmodule in Abhängigkeit von den Empfangssignalen der vier Empfangsantennen und den Sendesignalen der vier Sendeantennen 16 gemischte Signale erzeugt werden. Die Mischungsmodule können allgemein als IQ-Demodulatoren bezeichnet werden, die in analoger oder digitaler Form ausgebildet sein können.

Die Steuereinheit kann eingerichtet sein, die Sendesignale derart zu erzeugen, dass die Sendesignale mehrere Chirps innerhalb des Betriebszeitintervalls aufweisen. Während des jeweiligen Chirps kann eine Frequenz des jeweiligen Sendesignals von einer Startfrequenz aus ansteigen, um das Radarsystem in Form eines FMCW-Radars zu betreiben.

Weiterhin kann die Auswerteeinheit ausgebildet sein, das jeweilige Spektrum in Abhängigkeit von dem jeweiligen gemischten Signal zu erzeugen. Die Auswerteeinheit kann eingerichtet sein, das jeweilige Spektrum durch Durchführung einer Fourier-Transformation, insbesondere einer schnellen Fourier-Transformation (FFT), des jeweiligen gemischten Signals zu erzeugen. Wie oben beschrieben weist das jeweilige Spektrum jedem Frequenzpaar des jeweiligen Spektrums den Leistungs- oder Intensitätswert und die Phaseninformation zu.

Gemäß einer Variante kann das jeweilige Spektrum den Leistungs- oder Intensitätswert und die Phaseninformation des jeweiligen ausgewählten Frequenzpaares in Form einer jeweiligen komplexen Zahl bereitstellen. Ein Ergebnis der FFT kann die jeweilige komplexe Zahl umfassen, die dem jeweiligen ausgewählten Frequenzpaar zugeordnet ist. Die komplexe Zahl des jeweiligen ausgewählten Frequenzpaares kann durch eine Realteil und eine Imaginärteil spezifiziert sein. In einem Beispiel kann die Auswerteeinheit eingerichtet sein, den Leistungs- oder Intensitätswert und die Phaseninformation des jeweiligen ausgewählten Frequenzpaares in Abhängigkeit von dem Realteil und dem Imaginärteil der komplexen Zahl des jeweiligen ausgewählten Frequenzpaares zu berechnen, beispielsweise durch Berechnung des Arkustangens des Quotienten aus dem Imaginärteil und dem Realteil der komplexen Zahl des jeweiligen ausgewählten Frequenzpaares. Die Phaseninformation entspricht in diesem Fall einem Phasenwert. In diesem Fall können der Leistungs- oder Intensitätswert und die Phaseninformation des jeweiligen ausgewählten Frequenzpaares indirekt mittels der komplexen Zahl bereitgestellt werden, die dem jeweiligen ausgewählten Frequenzpaar zugeordnet ist.

In einem anderen Beispiel kann die Phaseninformation des jeweiligen ausgewählten Frequenzpaares gleich dem Imaginärteil der komplexen Zahl des jeweiligen ausgewählten Frequenzpaares sein. In diesem Fall wird davon ausgegangen, dass der Imaginärteil die Phaseninformation zusammen mit dem Leistungs- oder Intensitätswert des jeweiligen ausgewählten Frequenzpaares auf indirekte Weise bereitstellt. In einem Beispiel können der Leistungs- oder Intensitätswert und die Phaseninformation des jeweiligen ausgewählten Frequenzpaares indirekt über den Realteil und den Imaginärteil der komplexen Zahl des jeweiligen ausgewählten Frequenzpaares bereitgestellt werden.

In einem weiteren Beispiel kann die Auswerteeinheit konfiguriert sein, den Leistungs- oder Intensitätswert des jeweiligen ausgewählten Frequenzpaares in Abhängigkeit von dem Realteil und dem Imaginärteil der komplexen Zahl des jeweiligen ausgewählten Frequenzpaares zu berechnen.

Gemäß einer Variante kann die Phaseninformation des jeweiligen ausgewählten Frequenzpaares des jeweiligen Spektrums eine jeweilige Phasenverschiebung zwischen einer Frequenz des jeweiligen Sendesignals, von dem ausgehend das jeweilige gemischte Signal erzeugt wird, und einer Phase der Frequenzen des jeweiligen ausgewählten Frequenzpaares angeben oder mit der jeweiligen Phasenverschiebung in einem Zusammenhang stehen.

In einer möglichen Ausgestaltung ist die Auswerteeinheit eingerichtet, in Abhängigkeit von den Empfangssignalen und der Anzahl der Objekte der Teilmenge eine Schätzung von Winkeln der Objekte der Teilmenge, d.h. der Untersuchungsobjekte, in Bezug zu den Empfangsantennen durchzuführen. Bei dieser Ausgestaltung kann die Auswerteeinheit eingerichtet sein, den MUSIC- oder den ESPRIT-Algorithmus zur Durchführung der Winkelschätzung durchzuführen. Im Folgenden soll beispielhaft der MUSIC-Algorithmus beschrieben werden.

Der MUSIC-Algorithmus (Multiple Signal Classification) ist ein Verfahren zur Schätzung von Ankunftswinkeln (Azimut- und Elevationswinkel) der reflektierten Radarsignale. Die geschätzten Ankunftswinkel können als Winkel der Untersuchungsobjekte betrachtet werden. Insbesondere für den Fall, dass das Radarsystem als ein FMCW-Radar (Frequency Modulated Continuous Wave Radar) betrieben wird, kann die Auswerteeinheit mithilfe des MUSIC-Algorithmus Richtungen von einfallenden Wellenfronten der reflektierten Radarsignale schätzen.

Wenn die reflektierten Radarsignale von den Untersuchungsobjekten auf die Empfangsantennen treffen, gibt es je nach Richtung des einfallenden reflektierten Radarsignals Phasenunterschiede zwischen den verschiedenen Empfangsantennen.

Gemäß einer Variante kann die Auswerteeinheit eingerichtet sein, die oben genannten gemischten Signale der unterschiedlichen virtuellen Kanäle in Form einer Matrix zu speichern und zu verarbeiten. Gemäß einer Variante ist die Auswertungseinheit eingerichtet, bei einer Erstellung der Matrix in Abhängigkeit von den gemischten Signalen nur diejenigen ersten Frequenzen der gemischten Signale, die innerhalb des ersten Frequenzbereiches liegen, und diejenigen zweiten Frequenzen der gemischten Signale, die innerhalb des zweiten Frequenzbereiches liegen, zu berücksichtigen. Somit können für die Winkelschätzung Phasenunterschiede zwischen den virtuellen Kanälen nur derjenigen Frequenzen herangezogen werden, die in dem Toleranzbereich liegen. Dadurch kann ein erforderlicher Rechenaufwand für die Winkelschätzung reduziert werden. Des Weiteren kann damit die Erfassung der Objekte auf eine Verkehrssituation gerichtet werden, bei welcher die Objekte nah beieinander sind und etwa die gleich Geschwindigkeit haben. Mit anderen Worten kann damit die Erfassung der Objekte auf eine Erfassung der Untersuchungsobjekte eingeschränkt werden.

Dimensionen der Matrix können hierbei durch eine Anzahl der virtuellen Kanäle und eine Anzahl der Zeitmessungen beim Abtasten der Empfangssignale sein. Das jeweilige gemischte Signal kann sich aus den reflektierten Radarsignalen und aus Rauschen oder Störungen zusammensetzen.

Die Auswerteeinheit kann eingerichtet sein, bei einem Durchführen des MUSIC-Algorithmus aus den gemischten Signalen die Richtung der eintreffenden reflektierten Radarsignale zu extrahieren.

Weiterhin kann die Auswerteeinheit eingerichtet sein, bei einem Durchführen des MUSIC-Algorithmus eine Kovarianzmatrix der gemischten Signale zu berechnen. Die Kovarianzmatrix beschreibt eine Korrelation der gemischten Signale, die den unterschiedlichen virtuellen Kanälen zugeordnet sind.

Weiterhin kann die Auswerteeinheit eingerichtet sein, bei einem Durchführen des MUSIC-Algorithmus die Kovarianzmatrix mittels einer Eigenwertzerlegung in zwei Hauptkomponenten zu zerlegen. Die erste Hauptkomponente beschreibt einen Signalunterraum. Der Signalunterraum weist Eigenvektoren auf, die mit den größten Eigenwerten der Kovarianzmatrix assoziiert sind und repräsentiert die reflektierten Radarsignale. Die zweite Hauptkomponente beschreibt einen Rauschunterraum. Der Rauschunterraum umfasst weitere Eigenvektoren, die mit kleineren Eigenwerten der Kovarianzmatrix assoziiert sind und repräsentiert das Rauschen oder die Störungen.

Weiterhin kann die Auswerteeinheit eingerichtet sein, bei einem Durchführen des MUSIC-Algorithmus Informationen, die mithilfe des Rauschunterraums erfassbar sind, zu nutzen, um die möglichen Einfallsrichtungen der reflektierten Radarsignale zu schätzen. Dies kann die Auswerteeinheit beispielsweise durch eine Durchführung einer Suche über alle möglichen Azimut- und Elevationswinkel und eine Berechnung eines sogenannten "Pseudo-Spektrums" realisieren.

Insbesondere kann die Auswerteeinheit ausgebildet sein, diejenigen Azimut- und Elevationswinkel zu suchen, bei denen eine projizierte Richtung des virtuellen Antennenfeld mit den virtuellen Empfangsantennen orthogonal zum Rauschunterraum ist. Dies kann zu scharfen Maxima im Pseudo-Spektrum führen, die die tatsächlichen Azimut- und Elevationswinkel der reflektierten Radarsignale angeben. Ein jeweiliger Peak der Peaks korrespondiert hierbei mit einem geschätzten Azimut- und Elevationswinkel des jeweiligen reflektierten Radarsignals.

Das Pseudo-Spektrum ist eine Funktion der Azimut- und Elevationswinkel, und die Winkel, bei denen das Spektrum starke Peaks aufweist, entsprechen den Schätzungen der tatsächlichen Richtungen, aus denen die reflektierten Radarsignale auf das virtuelle Antennenfeld treffen.

Der MUSIC-Algorithmus könnte vergleichsweise präzise Winkelabschätzungen liefern, insbesondere wenn mehrere Untersuchungsobjekte und damit mehrere reflektierte Radarsignale gleichzeitig vorhanden sind.

Ist die Anzahl der Untersuchungsobjekte bekannt, so kann dies die folgenden Vorteile haben. Der MUSIC-Algorithmus basiert auf der Trennung des Signalunterraums, der die Informationen über die Untersuchungsobjekte enthält, von dem Rauschunterraum, der Informationen über das Rauschen und die Störungen enthält. Wenn die Anzahl der Objekte bekannt ist, kann die Dimension des Signalunterraums korrekt festgelegt werden. Daher ist in einer möglichen Variante die Auswerteeinheit eingerichtet, die Dimension des Signalunterraums in Abhängigkeit der ermittelten Anzahl der Untersuchungsobjekte zu bestimmen. Insbesondere kann die Auswerteeinheit hierbei eine Anzahl der großen, d.h. signifikanten, Eigenwerte der Kovarianzmatrix gleich der Anzahl der Untersuchungsobjekte setzen. Dies könnte zu einer präziseren Trennung zwischen dem Signal- und Rauschunterraum führen.

Wenn die Anzahl der Untersuchungsobjekte unbekannt ist, könnten möglicherweise mehr Eigenwerte der Kovarianzmatrix als nötig genutzt werden. Dies könnte dazu führen, dass anhand von Komponenten des Rauschunterraumes weitere Objekte interpretiert werden, die nicht existieren, was die Winkelschätzungen verfälschen könnte. Dies könnte durch ein Verwenden der Angabe über die Anzahl der Untersuchungsobjekte verhindert werden.

Weiterhin kann die Auswerteeinheit eingerichtet sein, anhand der Anzahl der Untersuchungsobjekte eine Dimension des Rauschunterraums zu bestimmen. Je präziser der Rauschunterraum definiert ist, desto besser können mithilfe des MUSIC-Algorithmus die Winkel geschätzt werden, indem nach Signalen gesucht wird, die orthogonal zum Rauschunterraum sind.

Wie oben beschrieben, kann bei der Durchführung des MUSIC-Algorithmus das sogenannte Pseudo-Spektrum generiert werden, das Peaks an den Positionen (Winkeln) zeigt, die den tatsächlichen Einfallswinkeln der reflektierten Radarsignale und damit den Azimut- und Elevationswinkeln der Untersuchungsobjekte entsprechen. Ist die Anzahl der Untersuchungsobjekte bekannt, kann die Auswerteeinheit eine Suche nach diesen Peaks schneller durchführen.

Da in den meisten Fällen die Dimension des Signalunterraums direkt mit der Anzahl der Untersuchungsobjekte verknüpft ist, ist es möglich durch die Kenntnis der Anzahl der Untersuchungsobjekte die Winkelschätzung mithilfe des MUSIC-Algorithmus effizienter gestalten. Beispielsweise kann die Auswerteeinheit eingerichtet sein, mögliche Kombinationen von Eigenwerten und Eigenvektoren der Kovarianzmatrix in Abhängigkeit von der Anzahl der Untersuchungsobjekte zu bestimmen. Dadurch kann der MUSIC-Algorithmus für die relevantesten Kombinationen angewendet werden, wodurch einen Rechenzeit für die Winkelschätzung mithilfe des MUSIC-Algorithmus reduziert werden könnte.

Weiterhin könnte eine Gefahr von Mehrdeutigkeiten bei der Winkelschätzung durch Kenntnis der Anzahl der Untersuchungsobjekte reduziert werden. Insbesondere wenn die Untersuchungsobjekte sehr nahe beieinander liegen, kann die Kenntnis der genauen Anzahl der Untersuchungsobjekte helfen, Mehrdeutigkeiten zu reduzieren, da eine Anzahl von separaten Peaks, die im Pseudo-Spektrum vorhanden sein sollten, bekannt ist. Diese ist gleich der Anzahl der Untersuchungsobjekte.

Weiterhin kann die Auswerteeinheit eingerichtet sein, den MUSIC-Algorithmus auf die Anzahl der Untersuchungsobjekte abzustimmen. Zum Beispiel kann die Auswerteeinheit eine Suchfenstergröße anpassen. Indem das Suchfenster für die Pseudo-Spektrum-Analyse basierend auf der erwarteten Anzahl von Peaks verkleinert wird, könnte eine Wahrscheinlichkeit erhöht werden, dass du die richtigen Winkel identifiziert werden.

Weiterhin kann gemäß einer Variante die Auswerteeinheit eingerichtet sein, eine Feinjustierung einer Frequenzauflösung an die Anzahl der Untersuchungsobjekte anzupassen. In Szenarien, in denen mehrere Objekte sehr nah beieinander liegen, kann das Wissen über die genaue Anzahl der Untersuchungsobjekte helfen, die Frequenzauflösung des MUSIC-Algorithmus gezielt zu optimieren, um die Winkel präziser zu trennen.

Gemäß einer weiteren Ausgestaltung ist die Auswerteeinheit eingerichtet, ein weiteres Leistungsspektrum in Abhängigkeit von den Phaseninformationen der ausgewählten Frequenzpaare zu erzeugen. Erste Frequenzen des weiteren Leistungsspektrums repräsentieren Werte eines Azimutwinkels in Bezug zu den Empfangsantennen. Zweite Frequenzen des weiteren Leistungsspektrums repräsentieren Werte eines Elevationswinkels in Bezug zu den Empfangsantennen. Das weitere Leistungsspektrum ordnet einem jeweiligen weiteren Frequenzpaar, welches eine der ersten Frequenzen und eine der zweiten Frequenzen des weiteren Leistungsspektrums umfasst, eine Intensitätsinformation und eine Phaseninformation zu. Bei dieser Ausgestaltung ist die Auswerteeinheit eingerichtet, die Pixelwerte der Pixel in Abhängigkeit von den Phaseninformationen der weiteren Frequenzpaare zu bestimmen, wobei dem jeweiligen weiteren Frequenzpaar ein jeweiliger Pixel der Pixel zugeordnet ist. Weiterhin kann bei dieser Ausgestaltung die Auswerteeinheit eingerichtet sein, die Pixelwerte der Pixel in Abhängigkeit von den Phaseninformationen der weiteren Frequenzpaare zu bestimmen, wobei dem jeweiligen weiteren Frequenzpaar ein jeweiliger Pixel der Pixel zugeordnet ist. Die Auswerteeinheit kann hierbei eingerichtet sein, den Pixelwert des jeweiligen Pixels in Abhängigkeit von der Phaseninformation desjenigen weiteren Frequenzpaares zu bestimmen, welches dem jeweiligen Pixel zugeordnet ist.

Mithilfe des weiteren Leistungsspektrums kann jedem weiteren Frequenzpaar jeweils ein Winkelpaar zugeordnet werden, welches einen Wert für den Azimutwinkel und einen Wert für den Elevationswinkel umfasst.

Die Auswerteeinheit kann eingerichtet sein, das weitere Leistungsspektrum, im Folgenden auch als Winkelspektrum bezeichnet, durch Ausführen einer Fourier-Transformation der Leistungs- oder Intensitätswerte und/oder der Phaseninformationen der ausgewählten Frequenzpaare, im Folgenden auch als räumliche Fourier-Transformation bezeichnet, zu erzeugen. Damit ergeben sich die Phaseninformationen der weiteren Frequenzpaare unter anderem aus den Phaseninformationen der ausgewählten Frequenzpaare. Dadurch, dass bei dieser Ausgestaltung die Pixelwerte in Abhängigkeit von den Phaseninformationen der weiteren Frequenzpaare berechnet sind und die Phaseninformationen der weiteren Frequenzpaare in Abhängigkeit von den Phaseninformationen der ausgewählten Frequenzpaare berechnet sind, sind bei dieser Ausgestaltung die Pixelwerte auf indirekte Weise in Abhängigkeit von den Phaseninformationen der ausgewählten Frequenzpaare berechnet. Bei der räumlichen Fourier-Transformation können relative Abstände der Sendeantennen und Empfangsantennen zueinander berücksichtigt werden.

Im Vergleich zu einer Variante, bei welcher die Pixelwerte unmittelbar in Abhängigkeit der Phaseninformationen der ausgewählten Frequenzpaare generiert werden, stehen bei der Ausgestaltung, bei welcher die Pixelwerte in Abhängigkeit von den Phaseninformation der weiteren Frequenzpaare berechnet werden, mehr Werte zur Berechnung der Pixelwerte zur Verfügung. Weiterhin, dadurch, dass die Phaseninformationen der weiteren Frequenzpaare in den meisten Fällen in Abhängigkeit von den relativen Abständen der Sendeantennen und Empfangsantennen zueinander berechnet werden, könnte das Bild einen höheren Informationsgehalt aufweisen, wenn die Pixelwerte in Abhängigkeit der Phaseninformationen der weiteren Frequenzpaare berechnet werden. Dies könnte zu einer höheren Genauigkeit bei der Ermittlung der Anzahl der Untersuchungsobjekte mithilfe der Ausgabe des NNs führen.

Die Intensitätsinformation des jeweiligen weiteren Frequenzpaares kann in Form eines jeweiligen Leistungs- oder Intensitätswertes ausgebildet sein. Die Phaseninformation des jeweiligen weiteren Frequenzpaares kann gemäß einer Variante in Form eines Phasenwertes des jeweiligen weiteren Frequenzpaares ausgebildet sein. Gemäß einer weiteren möglichen Variante kann die Phaseninformation des jeweiligen weiteren Frequenzpaares in Form einer jeweiligen komplexen Zahl des Winkelspektrums, welche dem jeweiligen weiteren Frequenzpaar zugeordnet ist, bereitgestellt werden. Hierbei kann der Phasenwert des jeweiligen weiteren Frequenzpaares durch einen Bezug zwischen einem Realteil und einem Imaginärteil, insbesondere durch Berechnung des Arkustangens des Quotienten aus dem Imaginärteil und dem Realteil, der jeweiligen komplexen Zahl des jeweiligen weiteren Frequenzpaars berechnet werden. Da sich aus dem Imaginärteil unter Verwendung des Realteils der jeweilige Phasenwert für das jeweilige weitere Frequenzpaar berechnen lässt, kann gemäß einer weiteren Variante auch der Imaginärteil der komplexen Zahl des Winkelspektrums, welche dem jeweiligen weiteren Frequenzpaar zugeordnet ist, als die Phaseninformation des jeweiligen weiteren Frequenzpaars ausgebildet sein.

Das Winkelspektrum kann als 2D-Funktion betrachtet werden, wobei unterschiedliche Frequenzen der ersten Frequenzen des Winkelspektrums unterschiedliche Werte eines ersten Arguments der 2D-Funktion darstellen können und unterschiedliche Frequenzen der zweiten Frequenzen des Winkelspektrums unterschiedliche Werte eines zweiten Arguments der 2D-Funktion darstellen können. Somit kann jedes Wertepaar des ersten und zweiten Arguments das jeweilige weitere Frequenzpaar repräsentieren. Jedem Wertepaar des ersten und zweiten Arguments wird von der 2D-Funktion ein entsprechender Satz von Funktionswerten zugewiesen. Der jeweilige Satz von Funktionswerten kann den jeweiligen Leistungs- oder Intensitätswert und die Phaseninformation des jeweiligen weiteren Frequenzpaares umfassen, das durch das jeweilige Wertepaar des ersten und zweiten Arguments repräsentiert ist.

Gemäß einer weiteren Ausgestaltung kann die Auswerteeinheit eingerichtet sein, die Intensitätsinformation und die Phaseninformation des jeweiligen weiteren Frequenzpaars mithilfe der oben genannten komplexen Zahl des Winkelspektrums, welche dem jeweiligen weiteren Frequenzpaar zugeordnet ist, bereitzustellen. Die komplexen Zahlen des Winkelspektrums umfassen jeweils einen Realteil und einen Imaginärteil. Die Auswerteeinheit kann bei dieser Ausgestaltung eingerichtet sein, für den jeweiligen Pixel, der dem jeweiligen weiteren Frequenzpaar zugeordnet ist, einen jeweiligen Satz von Pixelwerten zu bestimmen. Der jeweilige Satz von Pixelwerten des jeweiligen Pixels, der dem jeweiligen weiteren Frequenzpaar zugeordnet ist, umfasst einen ersten Pixelwert, der von dem Realteil der komplexen Zahl des jeweiligen weiteren Frequenzpaars abhängt, und einen zweiten Pixelwert, der von dem Imaginärteil der komplexen Zahl des jeweiligen weiteren Frequenzpaars abhängt.

Durch eine derartige Berechnung der Pixelwerte der Pixel kann eine jeweilige Information, die durch den Realteil und den Imaginärteil der jeweiligen komplexen Zahl des Winkelspektrums bereitgestellt wird, durch den jeweiligen Pixel des Bildes abgebildet werden. Dies ermöglicht es, eine verbundene Information, die durch eine Verbindung zwischen dem Realteil und dem Imaginärteil in Form der jeweiligen komplexen Zahl des Winkelspektrums vorgegeben ist, mithilfe des Bildes zu repräsentieren. Dadurch, dass diese verbundene Information mithilfe des Bildes repräsentierbar ist, könnte eine Informationsdichte des Bildes bezüglich einer Information über die Anzahl der Untersuchungsobjekte erhöht werden. Durch eine Erhöhung der Informationsdichte des Bildes könnte die Genauigkeit der Ermittlung der Anzahl der Untersuchungsobjekte mithilfe des NNs erhöht werden.

Die ersten Frequenzen des Winkelspektrums können einen Azimutwinkel von vermuteten Teilbereichen der Umgebung des Fahrzeugs angeben, in denen sich die Untersuchungsobjekte befinden können. Die zweiten Frequenzen des Winkelspektrums können einen Elevationswinkel der vermuteten Teilbereiche angeben, in denen sich die Untersuchungsobjekte befinden können.

Jedem Teilbereich kann jeweils einem der weiteren Frequenzpaare, insbesondere einem der Winkelpaare, zugeordnet werden. Der Leistungs- oder Intensitätswert, die dem jeweiligen weiteren Frequenzpaar zugeordnet sind, können eine Wahrscheinlichkeit angeben, dass sich eines der Untersuchungsobjekte in dem Teilbereich befindet, der dem jeweiligen weiteren Frequenzpaar zugeordnet ist. Je höher der Leistungs- oder Intensitätswert des jeweiligen weiteren Frequenzpaars ist, desto höher kann die Wahrscheinlichkeit sein, dass sich eines der Untersuchungsobjekte in demjenigen Teilbereich befindet, der dem jeweiligen weiteren Frequenzpaar zugeordnet ist.

Wird nun, wie oben beschrieben, das Winkelspektrum in Form der Pixelwerte des Bildes abgebildet, so könnte dies ein Schätzen der Anzahl der Untersuchungsobjekte mithilfe des NN vereinfachen, insbesondere, wenn die Struktur des NNs an eine Struktur eines neuronalen Netzes, welches für Bilderkennungsaufgaben erstellt wurde, angelehnt ist oder genau diese Struktur aufweist. Dadurch, dass die Pixelwerte zusätzlich zu den Leistungs- oder Intensitätswerten die Phaseninformationen aufweisen, könnte durch die oben beschriebene erhöhte Informationsdichte die Genauigkeit beim Ermitteln der Anzahl der Untersuchungsobjekte gesteigert werden.

Gemäß einer weiteren Ausgestaltung kann der jeweilige Satz von Pixelwerten des jeweiligen Pixels einen dritten Pixelwert umfassen, der gleich dem Phasenwert desjenigen weiteren Frequenzpaares ist, welches dem jeweiligen Pixel zugeordnet ist. Bei dieser Ausgestaltung kann die durch die jeweilige Zahl des jeweiligen weiteren Frequenzpaares bereitgestellte Phaseninformation höher gewichtet werden, da sie auf zweifache Weise bereitgestellt wird. Zum einen durch den Imaginärteil auf indirekte Weise und durch den Phasenwert auf direkte Weise. Dadurch könnte in einigen Anwendungsfällen die Genauigkeit beim Ermitteln der Anzahl der Untersuchungsobjekte weiter gesteigert werden.

Gemäß einer weiteren Ausgestaltung umfasst der Satz von Pixelwerten des jeweiligen Pixels einen vierten Pixelwert, der gleich einem Betrag derjenigen komplexen Zahl ist, die demjenigen weiteren Frequenzpaar zugeordnet ist, welches dem jeweiligen Pixel zugeordnet ist. Durch eine derartige zusätzliche Gewichtung des Leistungs- oder Intensitätswertes, der bei einer Berechnung des Betrages verwendet wird, könnte in einigen Anwendungsfällen die Genauigkeit beim Ermitteln der Anzahl der Untersuchungsobjekte weiter gesteigert werden.

Wie oben beschrieben, kann das NN eingerichtet sein, anhand des in Form des Bildes dargestellten Winkelspektrums die Ausgabe zu generieren, die die Information über die Anzahl der Untersuchungsobjekte aufweist. Die Verwendung der Phaseninformationen der ausgewählten Frequenzpaare könnte einen weiteren Vorteil haben, der im Folgenden beschrieben wird.

Im Allgemeinen kann, wie oben beschrieben, das jeweilige reflektierte Radarsignal von den Reflexionen der ausgesendeten Radarsignale an dem jeweiligen Untersuchungsobjekt resultieren. Aufgrund unterschiedlicher Oberflächeneigenschaften der Untersuchungsobjekte und/oder aufgrund unterschiedlicher Umgebungsbedingungen in der Nähe der Untersuchungsobjekte kann es zu einer unterschiedlichen Phasenverschiebung bei der Reflexion der Radarsignale an dem jeweiligen Untersuchungsobjekt kommen. Beispielsweise kann die Reflexion einer elektromagnetischen Welle an einer Metallplatte dazu führen, dass das elektromagnetische Feld im Vergleich zur Reflexion einer elektromagnetischen Welle an einem nichtmetallischen Teil gegenüber dem Magnetfeld phasenverschoben ist. Solche unterschiedlichen Phasenverschiebungen aufgrund der Reflexionen an den Untersuchungsobjekten können die Verarbeitung der Empfangssignale beeinflussen und sich in Form von unterschiedlichen Phaseninformationen der ausgewählten Frequenzpaare bemerkbar machen. So können die unterschiedlichen Phasenverschiebungen aufgrund der Reflexionen die Phaseninformation der Spektren und damit auch des Winkelspektrums beeinflussen. Dies kann dazu führen, dass eine Differenzierung der Untersuchungsobjekte anhand des Bildes genauer durchgeführt werden könnte. Es hat sich in vielen Fällen gezeigt, dass das NN eingerichtet ist, eine Differenzierung der Untersuchungsobjekte intern durchzuführen, um die Information über die Anzahl der Untersuchungsobjekte zu berechnen.

Im Allgemeinen können ein oder mehrere mathematische Formeln, welche physikalische Gesetze, die die Phasenverschiebung von Radarsignalen mit den Oberflächeneigenschaften und/oder den Umgebungsbedingungen in Beziehung setzen, sehr komplex sein und sensitiv gegenüber eine Variation der Umgebungsbedingungen sein. Darüber hinaus kann das Risiko bestehen, dass ein relevanter physikalischer Effekt nicht berücksichtigt wird, wenn physikalische Gesetze in Bezug auf die Phasenverschiebung von Radarsignalen durch die Formeln ausgedrückt werden. Diese Schwierigkeit kann umgangen werden, indem man die Auswerteeinheit mit dem NN ausstattet. Der NN kann darauf trainiert werden, die Anzahl der Untersuchungsobjekte auf der Grundlage der Phaseninformation der ausgewählten Frequenzpaare oder der Phaseninformationen der weiteren Frequenzpaare, insbesondere in Form der Pixelwerte, zu schätzen oder Informationen zu berechnen, die Auskunft über die Anzahl der Untersuchungsobjekte geben. Zu diesem Zweck können die Trainingsdaten Beobachtungen unterschiedlicher Phasenverschiebungen von reflektierten Trainingsradarsignalen an mindestens zwei verschiedenen Trainingsobjekten umfassen. Durch Training des NN mit solchen Trainingsdaten können die physikalischen Effekte, die Phasenverschiebungen von reflektierten Radarsignalen an den verschiedenen Trainingsobjekten verursachen, durch das NN erlernt werden. Das trainierte NN mit seinen an die Trainingsdaten angepassten Werten von Parametern, wie zum Beispiel die oben genannten Verbindungsgewichte, kann zumindest einen Teil der physikalischen Gesetze bezüglich der Phasenverschiebungen der reflektierten Radarsignale an den verschiedenen Trainingsobjekten darstellen. Das NN kann als Blackbox betrachtet werden und das Training des NNs kann anstelle von Experimenten bezüglich der Phasenverschiebungen von Radarsignalen, die an verschiedenen Fahrzeugtypen oder Personen unter verschiedenen Umgebungsbedingungen reflektiert werden, durchgeführt werden. Somit kann das NN den Aufwand für eine Herstellung des vorgeschlagenen Radarsystems reduzieren, welches Phasenverschiebungen der reflektierten Radarsignale zur Ermittlung der Anzahl der Untersuchungsobjekte berücksichtigen kann.

Gemäß einer weiteren Ausgestaltung kann das neuronale Netz Verbindungsgewichte aufweisen, die eine Stärke von Verbindungen zwischen Neuronen des neuronalen Netzes angeben, wobei zumindest ein Teil der Verbindungsgewichte in Form von komplexen Werten ausgebildet sind. Die komplexen Werte, die die Verbindungsgewichtet repräsentieren, weisen jeweils einen Realteil und einen Imaginärteil auf. Da die Verbindungsgewichte in Form der komplexen Werte ausgebildet sind, ist es möglich, dass eine gekoppelte Information, die durch die Intensitätsinformation und die Phaseninformation des jeweiligen weiteren Frequenzpaares vorliegt, durch das NN durch Berechnungen innerhalb des NNs weiter verbreitet wird. Die gekoppelte Information kann durch die Verwendung der komplexwertigen Verbindungsgewichte beispielsweise durch Multiplikation mit einem oder mehrerer der Verbindungsgewichte verarbeitet werden. Dies könnte die Genauigkeit beim Ermitteln der Anzahl der Untersuchungsobjekte weiter steigern.

Ein Training des NNs kann ein Erzeugen von Trainingsdaten umfassen. Die Trainingsdaten können Trainingsbilder und Zieldatensätze umfassen. Die Trainingsbilder können in Abhängigkeit von Trainingsempfangssignalen generiert werden. Weiterhin kann ein Training des NNs ein Eingeben der Trainingsbilder in das neuronale Netzwerk und ein Empfangen von mithilfe des neuronalen Netzes erzeugten Trainingsausgabedatensätzen umfassen. Weiterhin kann ein Training des NNs ein Berechnen eines Wertes einer Verlustfunktion in Abhängigkeit von den Zieldatensätzen und den Trainingsausgabedatensätzen umfassen. Weiterhin kann ein Training des NNs ein Adaptieren von Werten von Parametern des neuronalen Netzes in Abhängigkeit von dem Wert der Verlustfunktion umfassen. Nach dem Training ist das NN in einem trainierten Zustand.

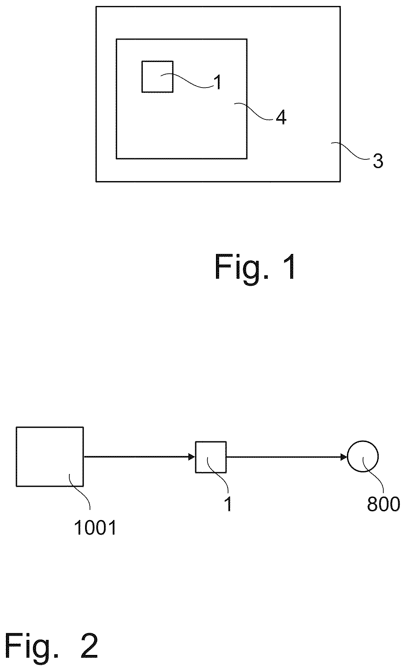

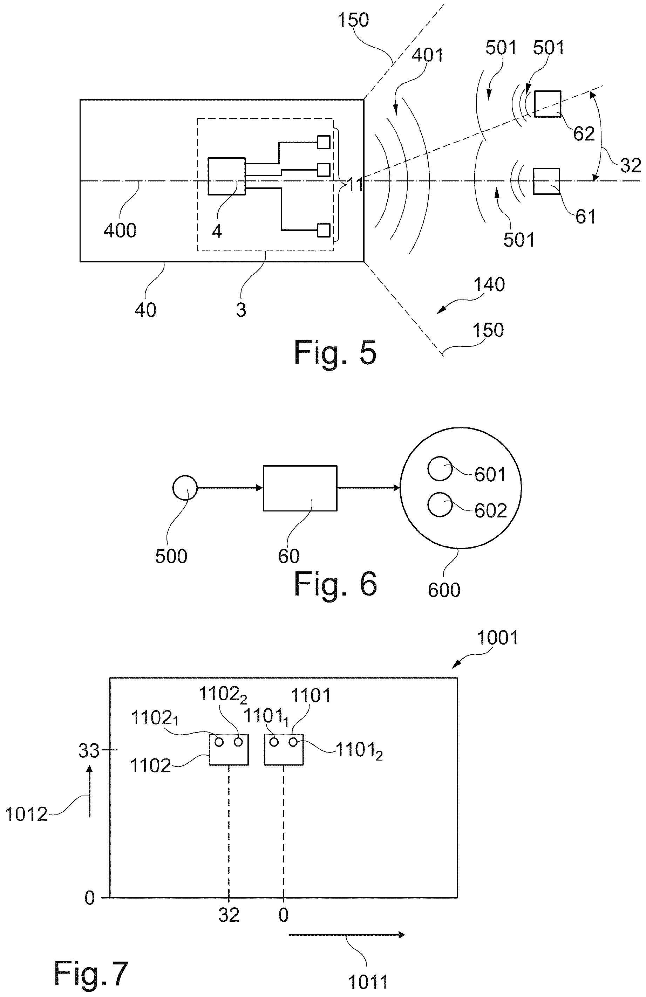

Figur 1 zeigt ein Radarsystem 3 zur Erfassung von Objekten dargestellt, beispielsweise eines ersten Objekts 61 und eines zweiten Objekts 62, in einer Umgebung 140 eines Fahrzeugs 40, das in Abbildung 5 gezeigt ist. Das Radarsystem 3 kann eine Auswerteeinheit 4 umfassen. Die Auswerteeinheit 4 weist ein trainiertes neuronales Netz 1 auf.

Die Auswerteeinheit 4 ist eingerichtet, Leistungsspektren 10 in Abhängigkeit von mittels Empfangsantennen 11 erzeugten Empfangssignalen 110 zu generieren. Erste Frequenzen des jeweiligen Leistungsspektrums repräsentieren Abstände der Objekte in Bezug zu den Empfangsantennen 11. Zweite Frequenzen des jeweiligen Leistungsspektrums repräsentieren relative Geschwindigkeiten der Objekte in Bezug zu den Empfangsantennen 11. Die Leistungsspektren 10 werden im Folgenden verkürzt als Spektren 10 bezeichnet.

Weiterhin ist die Auswerteeinheit 4 eingerichtet, für das jeweilige Spektrum ein Frequenzpaar auszuwählen. Die Frequenzpaare der Spektren 10 umfassen jeweils eine Frequenz der ersten Frequenzen, die in einem ersten Frequenzbereich liegt, und eine Frequenz der zweiten Frequenzen, die in einem zweiten Frequenzbereich liegt. Der erste Frequenzbereich repräsentiert einen Bereich der Abstände. Der zweite Frequenzbereich repräsentiert einen Bereich der relativen Geschwindigkeiten. Das jeweilige Spektrum umfasst zumindest eine Phaseninformation des ausgewählten Frequenzpaares des jeweiligen Spektrums.

Weiterhin ist die Auswerteeinheit 4 eingerichtet, Pixelwerte von Pixeln eines in Figur 2 gezeigten Bildes 1001 in Abhängigkeit von den Phaseninformationen der ausgewählten Frequenzpaare zu berechnen. Weiterhin ist die Auswerteeinheit 4 eingerichtet, unter Verwendung des Bildes 1001 als Eingabe für das neuronale Netz 1 mithilfe des neuronalen Netzes 1 eine Ausgabe 800 des neuronalen Netzes 1 zu berechnen und anhand der Ausgabe 800 eine Anzahl von Objekten einer Teilmenge der Objekte zu ermitteln. Die Objekte der Teilmenge der Objekte, d.h. die Untersuchungsobjekte, weisen jeweils einen Abstand in Bezug zu dem Radarsystem 3, der innerhalb des Bereichs der Abstände liegt, und eine relative Geschwindigkeit in Bezug zu dem Radarsystem 3 auf, die innerhalb des Bereichs der relativen Geschwindigkeiten liegt. Die Untersuchungsobjekte umfassen bei dem mithilfe der Figuren beschriebenen Anwendungsfall das erste Objekt 61 und das zweite Objekt 62.

Gemäß einer praktischen Variante weist die Ausgabe 800 eine natürliche Zahl auf, die die Anzahl der Untersuchungsobjekte unmittelbar angibt. In diesem Fall kann die Auswerteeinheit 4 die Anzahl der Untersuchungsobjekte anhand der Ausgabe 800 unmittelbar ermitteln, indem die Auswerteeinheit 4 die natürliche Zahl der Ausgabe 800 abfragt. Wie oben beschrieben, kann die Ausgabe 800 gemäß einer weiteren Variante mehrere natürliche Zahlen aufweisen, denen jeweils eine Wahrscheinlichkeit zugeordnet ist. In diesem Fall kann die Auswerteeinheit 4 durch eine Berechnung ausgehend von der Ausgabe 800 die Anzahl der Untersuchungsobjekte ermitteln, insbesondere schätzen.

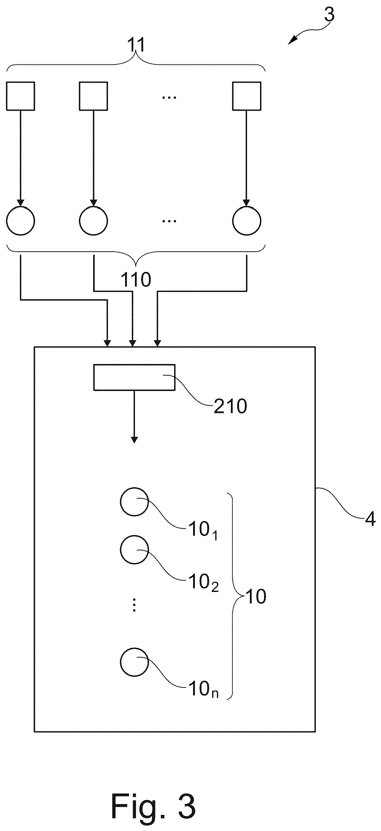

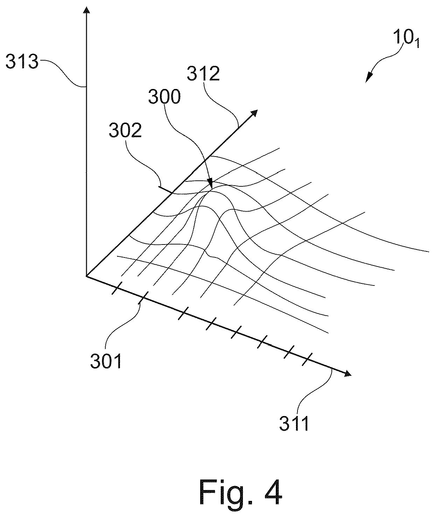

Die Auswerteeinheit 4 kann eingerichtet sein, die Spektren 10 mithilfe eines Spektrummoduls 210 der Auswerteeinheit 4 zu erzeugen, wie es in Figur 3 gezeigt ist. Figur 4 zeigt beispielhaft ein erstes Spektrum 10₁, ein zweites Spektrum 10₂ und ein n-tes Spektrum 10ₙ der Spektren 10. Die Spektren 10 werden in Abhängigkeit von den Empfangssignalen 110 erzeugt. Die Empfangssignale 110 werden mithilfe eines Satzes von Empfangsantennen 11 des Radarsystems 3 erzeugt.

Beispielhaft ist das erste Spektrum 10₁ in Abbildung 4 dargestellt. Entlang einer ersten Dimension 311 des ersten Spektrums 10₁ sind kurze Linien gezeichnet, die symbolisch Werte der ersten Frequenzen des ersten Spektrums 10₁ darstellen. Weitere kurze Linien entlang einer zweiten Dimension 312 des ersten Spektrums 10₁ stellen symbolisch Werte der zweiten Frequenzen des ersten Spektrums 10₁ dar. Eine dritte Dimension 313 des ersten Spektrums 10₁ kann einen Intensitäts- oder einen Leistungswert darstellen.

Abbildung 5 zeigt ein Anwendungsbeispiel des Radarsystems 3. Das Radarsystem 3 kann ein Teil des Fahrzeugs 40 sein und beispielsweise an einer Vorderseite des Fahrzeugs 40 angeordnet sein. Die Umgebung 140 des Fahrzeugs 40 kann ein dreidimensionaler Raum zwischen den gestrichelten Linien 150 sein.

Das Radarsystem 3 kann die oben genannten Sendeantennen und die in den Abbildungen nicht gezeigte Steuereinheit zum Senden von Radarsignalen 401 in Abhängigkeit von den oben genannten Sendesignalen umfassen. Die Radarsignale 401 können als ein Beispiel für die oben genannten Radarsignale aufgefasst werden. Insbesondere kann die jeweilige Sendeantenne der Sendeantennen das jeweilige Radarsignal der Radarsignale 401 in Abhängigkeit von dem jeweiligen Sendesignal aussenden.

Die Empfangsantennen 11 können die Empfangssignale 110 als Reaktion auf ein Empfangen von reflektierten Radarsignalen 501 erzeugen. Die reflektierten Radarsignale 501 können aus Reflexionen der Radarsignale 401 an den Objekten resultieren, beispielsweise durch Reflexionen am ersten Objekt 61 und am zweiten Objekt 62. Gemäß eines Beispiels kann ein erstes Radarsignal der reflektierten Radarsignale 501 aus Reflexionen der Radarsignale 401 am ersten Objekt 61 resultieren und ein zweites Radarsignal der reflektierten Radarsignale 501 aus Reflexionen der Radarsignale 401 am zweiten Objekt 62 resultieren. Die Auswerteeinheit 4 erzeugt die Spektren 10 indirekt in Abhängigkeit von den reflektierten Radarsignalen 501, da die Empfangssignale 110 in Abhängigkeit von den reflektierten Radarsignalen 501 generiert werden.

Die Steuereinheit kann eingerichtet sein, das Zeitmultiplexverfahren und/oder die binäre Phasenmodulation zur Codierung der Sendesignale durchzuführen. Dadurch kann die Auswerteeinheit 4 die reflektierten Radarsignale 501 auf der Grundlage der Codierung bei der Verarbeitung der Empfangssignale 110 voneinander unterscheiden.

Weiterhin kann die Auswerteeinheit 4 eingerichtet sein, die Spektren 10 in Abhängigkeit von den Sendesignalen und den Empfangssignalen 110 wie oben beschrieben zu erzeugen. Gemäß eines Beispiels kann die Auswerteeinheit 4 die gemischten Signale durch Mischen der Sendesignale mit den Empfangssignalen 110 erzeugen und die eine Fourier-Transformation des jeweiligen gemischten Signals durchführen, um das jeweilige Spektrum der Spektren 10 zu erhalten.

Gemäß eines Beispiels kann die Auswerteeinheit 4 ein Frequenzpaar 300 des ersten Spektrums 10₁ auswählen. Das ausgewählte Frequenzpaar 300 kann eine Frequenz 301 der ersten Frequenzen des ersten Spektrums 10₁, im Folgenden als erste ausgewählte Frequenz 301 bezeichnet, und eine Frequenz 302 der zweiten Frequenzen des ersten Spektrums 10₁, im Folgenden als zweite ausgewählte Frequenz 302 bezeichnet, umfassen. Die Auswerteeinheit 4 kann das Frequenzpaar 300 als dasjenige Frequenzpaar des ersten Spektrums 10₁ auswählen, das den höchsten Leistungs- oder Intensitätswert aufweist.

In Bezug auf das in Abbildung 5 dargestellte Anwendungsbeispiel des Radarsystems 3 kann die erste ausgewählte Frequenz 301 eine Entfernung der Objekte 61, 62 relativ zum Radarsystem 3 darstellen und die zweite ausgewählte Frequenz 302 eine relative Geschwindigkeit der Objekte 61, 62 in Bezug auf das Radarsystem 3 darstellen. Es kann angenommen werden, dass der Abstand des ersten Objekts 61 zum Radarsystem 3 ähnlich dem Abstand des zweiten Objekts 62 zum Radarsystem 3 ist. Dasselbe kann für die Relativgeschwindigkeit der Objekte 61, 62 angenommen werden.

Gemäß einer Variante kann die Auswerteeinheit 4 die Spektren 10 verarbeiten und das ausgewählte Frequenzpaar 300 in jedem Spektrum der Spektren 10 suchen. In diesem Fall weist das ausgewählte Frequenzpaar des jeweiligen Spektrums der Spektren 10 die erste ausgewählte Frequenz 301 und die zweite ausgewählte Frequenz 302 auf. Das jeweilige Spektrum der Spektren 10 kann eine Phaseninformation des jeweiligen ausgewählten Frequenzpaars des jeweiligen Spektrums umfassen.

Gemäß einer alternativen Variante kann die Auswerteeinheit 4 in Abhängigkeit von dem oben genannten zweidimensionalen Toleranzbereiches und dem ausgewählten Frequenzpaar 300 des ersten Spektrums 10₁ die ausgewählten Frequenzpaare der übrigen Spektren bestimmen, wie es oben beschrieben ist. Auch in diesem Fall umfasst das jeweilige Spektrum der Spektren 10 die Phaseninformation des jeweiligen ausgewählten Frequenzpaars des jeweiligen Spektrums.

Gemäß eines Beispiels kann die Auswerteeinheit 4 die Phaseninformation des ausgewählten Frequenzpaars jedes Spektrums der Spektren 10 in eine Phaseninformationsdatei 500 schreiben.

Die Auswerteeinheit 4 kann eingerichtet sein, eine räumliche Fourier-Transformation auf der Grundlage der Phaseninformationen der ausgewählten Frequenzpaare der Spektren 10 durchzuführen, beispielsweise in Abhängigkeit von der Phaseninformationsdatei 500, um ein Ergebnis der räumlichen Fourier-Transformation 600 zu erzeugen. Die Auswerteeinheit 4 kann eingerichtet sein, dass sie die räumliche Fourier-Transformation in Abhängigkeit von der Phaseninformationsdatei 500 und in Abhängigkeit von den relativen Positionen der Sendeantennen zueinander und zu den Empfangsantennen 11 durchführt.

Das Ergebnis der Fourier-Transformation 600 kann erste räumliche Frequenzen 601 und zweite räumliche Frequenzen 602 umfassen. Die Auswerteeinheit 4 kann ein Fourier-Modul 60 zur Berechnung der ersten räumlichen Frequenzen 601 und der zweiten räumlichen Frequenzen 602 in Abhängigkeit von der Phaseninformationsdatei 500 umfassen, wie in Abbildung 6 dargestellt. Die ersten räumlichen Frequenzen 601 können mögliche Azimutwinkel der Objekte in Bezug auf eine Längsachse 400 des Fahrzeugs 40 repräsentieren. Die zweiten räumlichen Frequenzen 602 können mögliche Höhenwinkel der Objekte in Bezug auf eine horizontale Ebene, die die Längsachse 400 enthält, repräsentieren.

Das Ergebnis der räumlichen Fourier-Transformation 600 kann in Form des oben genannten weiteren Leistungsspektrums, im Folgenden als weiteres Spektrum bezeichnet, ausgebildet sein. Das weitere Leistungsspektrum verknüpft jeweils eine der ersten räumlichen Frequenzen 601 und eine der zweiten räumlichen Frequenzen 602 in Form eines jeweiligen weiteren Frequenzpaars miteinander. Weiterhin kann das weitere Spektrum jedem weiteren Frequenzpaar eine Intensitätsinformation und eine Phaseninformation zuordnen.

Die Intensitätsinformation und die Phaseninformation des jeweiligen weiteren Frequenzpaars können aus der Fourier-Transformation der Phaseninformationsdatei 500 resultieren. Gemäß eines Beispiels kann das Ergebnis der räumlichen Fourier-Transformation 600 die Intensitätsinformation und die Phaseninformation des jeweiligen weiteren Frequenzpaars in Form einer jeweiligen komplexen Zahl bereitstellen. Die jeweilige komplexe Zahl kann einen jeweiligen Realteil und einen jeweiligen Imaginärteil umfassen. Gemäß eines Beispiels kann die Auswerteeinheit 4 eingerichtet sein, das Ergebnis der räumlichen Fourier-Transformation 600 in das oben beschriebene Winkelspektrum zu übertragen. In diesem Fall können die Intensitätsinformation und die Phaseninformation, beispielsweise in Form der komplexen Zahl, des jeweiligen weiteren Frequenzpaars dem jeweiligen Winkelpaar zugeordnet werden, das mit dem jeweiligen Paar von räumlichen Frequenzen assoziiert ist.

Im Folgenden wird ein Beispiel beschrieben, wie die Auswerteeinheit 4 eine in Figur 7 gezeigte erste Variante des Bildes 1001 mit Pixeln erzeugen kann. Gemäß einer Variante kann jeder Pixel des Bildes 1001 jeweils ein Winkelpaar der Winkelpaare des Winkelspektrums repräsentieren. Somit kann der jeweilige Pixel des Bildes 1001 das jeweilige weitere Frequenzpaar indirekt durch sein zugehöriges jeweiliges Winkelpaar repräsentieren.

Die Pixel des Bildes 1001 können jeweils Pixelwerte umfassen. Die Pixelwerte des jeweiligen Pixels des Bildes 1001 können verschiedene Kanäle des jeweiligen Pixels darstellen. Für das jeweilige Winkelpaar können die Pixelwerte des jeweiligen Pixels des Bildes 1001, der das jeweilige Winkelpaar repräsentiert, von der Intensitätsinformation und der Phaseninformation, beispielsweise von der komplexen Zahl, des jeweiligen Winkelpaares, d.h. des jeweiligen weiteren Frequenzpaares, welches dem jeweiligen Winkelpaar zugeordnet ist, abhängen.

Die Pixel des Bildes 1001 können jeweils einem entsprechenden Paar von Koordinatenwerten zum Rastern des Bildes 1001 zugeordnet werden, wobei jedes Paar von Koordinatenwerten einen Wert einer x-Achse 1011 und einen Wert einer γ-Achse 1012 des Bildes 1001 umfasst. Falls der jeweilige Pixel des Bildes 1001 das jeweilige Winkelpaar darstellt, können die Werte der x-Achse 1011 Werte des Azimutwinkels und die Werte der γ-Achse 1012 den Elevationswinkel darstellen. Somit kann das jeweilige Paar von Koordinatenwerten das jeweilige Winkelpaar darstellen, das einen Azimutwert aufweist, der gleich dem Wert der x-Achse 1011 des jeweiligen Paars von Koordinatenwerten ist, und einen Elevationswinkel aufweist, der gleich dem Wert der γ-Achse 1012 des jeweiligen Paars von Koordinatenwerten ist.

Gemäß einem anderen Beispiel können, falls der jeweilige Pixel des Bildes 1001 direkt das jeweilige Paar von räumlichen Frequenzen darstellt, die Werte der x-Achse 1011 Werte der ersten räumlichen Frequenzen 601 darstellen und die Werte der γ-Achse 1012 die zweiten räumlichen Frequenzen 602 darstellen. Somit kann ein jeweiliges Paar von Koordinaten aus einem Wert der x-Achse 1011 und einem Wert der γ-Achse 1012 das jeweilige weitere Frequenzpaar darstellen, das die erste räumliche Frequenz, die gleich dem Wert der x-Achse 1011 ist, und die zweite räumliche Frequenz, die gleich dem Wert der γ-Achse 1012 ist, umfasst.

Die Auswerteeinheit 4 kann eingerichtet sein, das Bild 1001 in Form eines ersten Bilddatensatzes zu verarbeitet und/oder bereitzustellen, der die Pixelwerte umfasst, die den Pixeln des Bildes 1001 zugeordnet sind. Die Zuordnung jedes Pixels des Bildes 1001 zu dem jeweiligen Koordinatenwertepaar kann durch eine Reihenfolge der Pixelwerte der Pixel des Bildes 1001 in dem ersten Bilddatensatz bereitgestellt werden.

Figur 5 zeigt eine beispielhafte Anwendung des Radarsystems 3, bei der sich das erste Objekt 61 in einem ersten Azimutwinkel von null Grad in Bezug zu der Längsachse 400 befindet und sich das zweite Objekt 62 in einem zweiten Azimutwinkel 32 in Bezug zu der Längsachse 400 befindet. Der zweite Azimutwinkel 32 kann negativ sein. In Bezug auf diese Anwendung kann das Bild 1001 einen ersten Pixel 1101, der einen Ort des ersten Objekts 61 angibt, und einen zweiten Pixel 1102, der einen Ort des zweiten Objekts 62 angibt, umfassen. Den Pixeln 1101, 1102 sind Werte des Azimutwinkels, nämlich der Wert Null und der zweite Azimuthwinkel 32, wie durch gestrichelte Linien in Abbildung 7 dargestellt, und ein Höhenwinkel 33 zugeordnet. Der Elevationswinkel 33 der Objekte 21, 22 ist in Abbildung 5 der Einfachheit halber nicht dargestellt.

In einem Beispiel kann die Auswerteeinheit 4 eingerichtet sein, die Pixelwerte des jeweiligen Pixels des Bildes 1001 in Abhängigkeit von der Intensitätsinformation und der Phaseninformation des jeweiligen Winkelpaares zu bestimmen, das durch den jeweiligen Pixel des Bildes 1001 repräsentiert wird.

Figur 7 zeigt eine erste Variante des Bildes 1001. Zur Erzeugung der ersten Variante des Bildes 1001 kann die Auswerteeinheit 4 eingerichtet sein, einen ersten Pixelwert der Pixelwerte des jeweiligen Pixels des Bildes 1001 gleich dem Realteil der komplexen Zahl desjenigen Winkelpaares zu setzen, das durch den jeweiligen Pixel des Bildes 1001 repräsentiert wird. Gemäß dem oben beschriebenen Beispiel kann ein erster Pixelwert 11011 des ersten Pixels 1101 gleich dem Realteil der komplexen Zahl des jeweiligen Winkelpaars sein, das durch den ersten Pixel 1101 des Bildes 1001 repräsentiert wird. In ähnlicher Weise kann ein erster Pixelwert 11021 des zweiten Pixels 1102 gleich dem Realteil der komplexen Zahl des jeweiligen Winkelpaars sein, das durch den zweiten Pixel 1102 des Bildes 1001 repräsentiert wird.

Darüber hinaus kann die Auswerteeinheit 4 zur Erzeugung der ersten Variante des Bildes 1001 eingerichtet sein, einen zweiten Pixelwert der Pixelwerte des jeweiligen Pixels des Bildes 1001 gleich dem Imaginärteil der komplexen Zahl des jeweiligen Winkelpaares zu setzen, das durch den jeweiligen Pixel des Bildes 1001 repräsentiert wird. Gemäß dem oben beschriebenen Beispiel kann ein zweiter Pixelwert 11012 des ersten Pixels 1101 gleich dem Imaginärteil der komplexen Zahl des jeweiligen Winkelpaars sein, das durch den ersten Pixel 1101 des Bildes 1001 repräsentiert wird. In ähnlicher Weise kann ein zweiter Pixelwert 11022 des zweiten Pixels 1102 gleich dem Imaginärteil der komplexen Zahl des jeweiligen Winkelpaars sein, das durch den zweiten Pixel 1102 des Bildes 1001 repräsentiert wird. Daher kann gemäß dem in Abbildung 7 gezeigten Beispiel jeder Pixel des Bildes 1001 zwei Pixelwerte umfassen. In Abbildung 7 sind nur der erste Pixel 1001 und der zweite Pixel 1002 dargestellt. Es versteht sich, dass für jede Kombination eines zulässigen Wertes der x-Achse 1011 und eines zulässigen Wertes der γ-Achse 1012 das Bild 1001 und insbesondere der erste Bilddatensatz die Pixelwerte des jeweiligen Pixels umfassen kann, die aus Gründen der Übersichtlichkeit in Abbildung 7 nicht gezeigt sind. Abbildung 7 stellt insbesondere nur die Pixel des Bildes 1001 dar, die den höchsten Intensitäts- oder Leistungswert entsprechend ihrer jeweiligen Intensitätsinformation aufweisen.

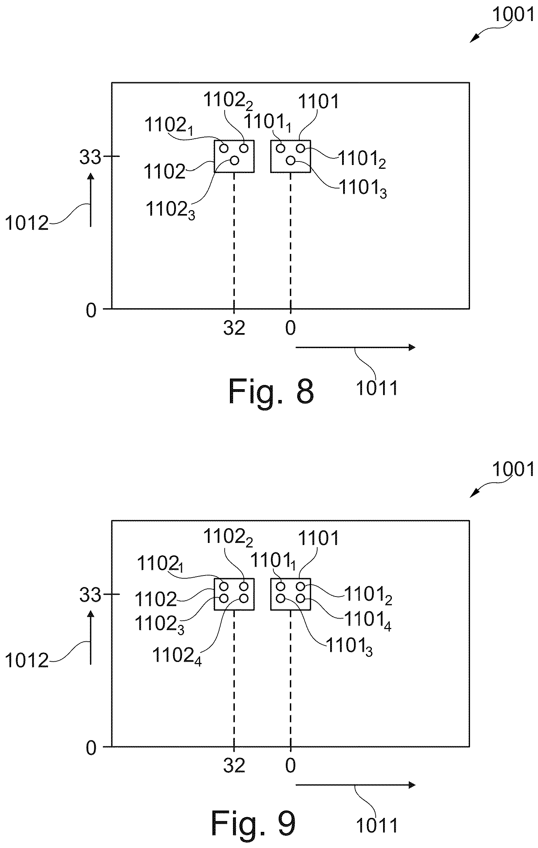

Figur 8 stellt eine zweite Variante des Bildes 1001 dar, bei welcher das Bild 1001 drei Pixelwerte für den jeweiligen Pixel aufweist. Zusätzlich zu dem ersten und zweiten Pixelwert jedes Pixels des Bildes 1001, wie es in Figur 7 gezeigt ist, können bei der zweiten Variante des Bildes 1001 die Pixelwerte des jeweiligen Pixels des Bildes 1001 einen dritten Pixelwert umfassen. Zur Erzeugung der zweiten Variante des Bildes 1001 kann die Auswerteeinheit 4 eingerichtet sein, den dritten Pixelwert der Pixelwerte des jeweiligen Pixels des Bildes 1001 gleich der Phaseninformation zu setzen, die durch die komplexe Zahl des jeweiligen Winkelpaares bereitgestellt wird, das durch den jeweiligen Pixel des Bildes 1001 repräsentiert wird. In einem Beispiel kann die Auswerteeinheit 4 die Phaseninformation der jeweiligen komplexen Zahl in Abhängigkeit von dem Realteil und dem Imaginärteil der jeweiligen komplexen Zahl berechnen, beispielsweise in Form des oben genannten Arkustangens.

Gemäß dem oben beschriebenen Beispiel kann ein dritter Pixelwert 11013 des ersten Pixels 1101 gleich der Phaseninformation der komplexen Zahl des jeweiligen Winkelpaars sein, das durch den ersten Pixel 1101 des Bildes 1001 repräsentiert wird. In ähnlicher Weise kann ein dritter Pixelwert 11023 des zweiten Pixels 1102 gleich der Phaseninformation der komplexen Zahl des jeweiligen Winkelpaars sein, das durch den zweiten Pixel 1102 des Bildes 1001 repräsentiert wird.

In Figur 9 ist eine dritte Variante des Bildes 1001 dargestellt, bei welcher das Bild 1001 vier Pixelwerte für den jeweiligen Pixel aufweist. Zusätzlich zu dem ersten, zweiten und dritten Pixelwert des jeweiligen Pixels des Bildes 1001, wie es in Figur 8 gezeigt ist, können bei der dritten Variante des Bildes 1001 die Pixelwerte des jeweiligen Pixels einen vierten Pixelwert umfassen. Zur Erzeugung der dritten Variante des Bildes 1001 kann die Auswerteeinheit 4 eingerichtet sein, den vierten Pixelwert der Pixelwerte des jeweiligen Pixels des Bildes 1001 gleich einem Betrag der komplexen Zahl des jeweiligen Winkelpaares zu setzen, das durch den jeweiligen Pixel des Bildes 1001 repräsentiert wird. In einem Beispiel kann die Auswerteeinheit 4 den Betrag der jeweiligen komplexen Zahl in Abhängigkeit von dem Realteil und dem Imaginärteil der jeweiligen komplexen Zahl berechnen.

In Anlehnung an das Anwendungsbeispiel nach Figur 5 kann ein vierter Pixelwert 11014 des ersten Pixels 1101 gleich dem Betrag der komplexen Zahl des jeweiligen Winkelpaars sein, das durch den ersten Pixel 1101 des Bildes 1001 repräsentiert wird. Analog kann ein vierter Pixelwert 11024 des zweiten Pixels 1102 gleich dem Betrag der komplexen Zahl des jeweiligen Winkelpaares sein, das durch den zweiten Pixel 1102 des Bildes 1001 repräsentiert wird.

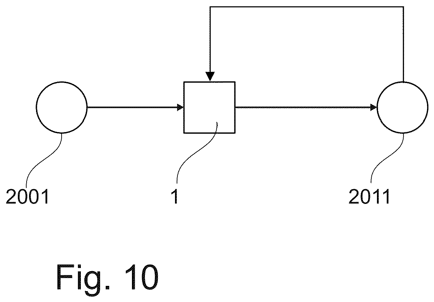

Im Folgenden wird ein beispielhaftes Verfahren zum Trainieren des NN 1 beschrieben. Das Training kann ein Erzeugen von in Figur 10 gezeigten Trainingsdaten 2001 umfassen. Die Trainingsdaten 2001 können Eingabedatensätze und Zieldatensätze umfassen. Das Erzeugen der Trainingsdaten 2001 kann ein Erzeugen der Eingabedatensätze der Trainingsdaten 2001 in Abhängigkeit von Trainingsempfangssignalen umfassen.

Die Trainingsempfangssignale können mittels Trainingsradarsignalen unter Verwendung des Radarsystems 3 erzeugt werden. Die Trainingsradarsignale können Sätze von Trainingsradarsignalen umfassen. Jeder Satz von Trainingsradarsignalen kann innerhalb einer jeweiligen Zeitspanne mittels der Sendeantennen des Radarsystems 3 gesendet werden. Somit können die Sätze von Trainingsradarsignalen nacheinander gesendet werden. Während der jeweiligen Zeitspanne des Sendens des jeweiligen Satzes von Trainingsradarsignalen kann jede Sendeantenne ein jeweiliges Trainingsradarsignal des jeweiligen Satzes von Trainingsradarsignalen senden.

Die Trainingsempfangssignale können Sätze von Trainingsempfangssignalen umfassen, wobei die Antennen 11 den jeweiligen Satz von Trainingsempfangssignalen innerhalb der jeweiligen Zeitspanne erzeugen können. Die Antennen 11 können den jeweiligen Satz von Trainingsempfangssignalen als Reaktion auf ein Empfangen eines jeweiligen reflektierten Satzes von Trainingsradarsignalen erzeugen. Der jeweilige reflektierte Satz von Trainingsradarsignalen kann aus Reflexionen des jeweiligen gesendeten Satzes von Trainingsradarsignalen an Trainingsobjekten in der Umgebung 140 des Fahrzeugs 40 innerhalb der jeweiligen Zeitspanne resultieren. In einem Beispiel können die Trainingsobjekte das erste Objekt 61 und das zweite Objekt 62 umfassen.

Gemäß eines Beispiels kann jeder Eingabedatensatz der Trainingsdaten 2001 abhängig von dem jeweiligen Satz von Trainingsempfangssignalen in gleicher Weise erzeugt werden, wie das Bild 1001 abhängig von den Empfangssignalen 110 erzeugt wird. Der jeweilige Eingabedatensatz umfasst ein jeweiliges Trainingsbild, welches analog zu dem Bild 1001 erzeugt wird. Anstatt die Empfangssignale 110 zur Erzeugung des Bildes 1001 zu verwenden, kann der jeweilige Satz von Trainingsempfangssignalen zur Erzeugung des jeweiligen Trainingsbildes verwendet werden. Genauer gesagt kann die Auswerteeinheit 4 analog zu den oben erwähnten Leistungsspektren 10 ein jeweiliges Trainingsleistungsspektrum in Abhängigkeit von dem jeweiligen Satz von Trainingsempfangssignalen erzeugen und in Abhängigkeit von dem jeweiligen Trainingsleistungsspektrum ein jeweiliges Trainingswinkelspektrum generieren, um das jeweilige Trainingsbild zu erzeugen.

Darüber hinaus kann das Training ein Eingeben der Eingabedatensätze der Trainingsdaten 2001, insbesondere der Trainingsbilder, in das NN 1 und als Antwort ein Empfangen von Trainingsausgabedatensätzen 2011 von dem NN 1 umfassen. In diesem Fall kann das NN 1 für jeden Eingabedatensatz der Trainingsdaten 2001, insbesondere für jedes Trainingsbild, einen entsprechenden Ausgabedatensatz der Trainingsausgabedatensätze 2011 erzeugen.

Darüber hinaus kann das Training eine Berechnung eines Wertes einer Verlustfunktion umfassen, die von den Trainingsausgabedatensätzen 2011 und den Zieldatensätzen der Trainingsdaten 2001 abhängt. Gemäß eines Beispiels kann der Wert der Verlustfunktion in Abhängigkeit von einer Abweichung zwischen den Trainingsausgabedatensätzen 2011 und den Zieldatensätzen der Trainingsdaten 2001 berechnet werden. Zum Beispiel kann der Wert der Verlustfunktion abhängig von einer Summe von Quadraten von Differenzen berechnet werden, wobei jede Differenz die Differenz zwischen dem jeweiligen Ausgabedatensatz der Trainingsausgabedatensätze 2011 und dem jeweiligen Zieldatensatz der Trainingsdaten 2001 sein kann.

Die Trainingsausgabedatensätze 2011 und die Zieldatensätze der Trainingsdaten 2001 können jeweils dasselbe Format wie die Ausgabe 800 aufweisen. Gemäß eines Beispiels kann eine Anzahl der Trainingsobjekte des jeweiligen Zieldatensatzes der Trainingsdaten 2001 manuell bestimmt werden.

Das Training des NN 1 kann ein Anpassen von Werten von Parametern des NN 1 in Abhängigkeit vom Wert der Verlustfunktion umfassen. Die Parameter des NN 1 können Verbindungsgewichte zwischen Neuronen des NN 1 oder Parameter von Aktivierungsfunktionen oder Parameter von Pooling-Funktionen des NN 1 umfassen, falls der erste NN 1 ein CNN ist. Eine Anpassung der Werte der Parameter des NN 1 an die Trainingsdaten 2001 kann unter Verwendung von maschinellen Lernverfahren wie Backpropagation oder weiteren Lernmethoden durchgeführt werden. Nachdem die Werte der Parameter an die Trainingsdaten 2001 angepasst wurden, kann sich das erste NN 1 in einem trainierten Zustand befinden, d. h. trainiert sein.

## Patentansprüche

1. Radarsystem (3) zur Erfassung von Objekten (61, 62) in einer Umgebung eines Fahrzeugs (40), wobei das Radarsystem (3) eine Auswerteeinheit (4) mit einem trainierten neuronalen Netz (1) umfasst und eingerichtet ist,
- Leistungsspektren (10) in Abhängigkeit von mittels Empfangsantennen (11) erzeugten Empfangssignalen (110) zu generieren, wobei erste Frequenzen des jeweiligen Leistungsspektrums Abstände der Objekte (61, 62) in Bezug zu den Empfangsantennen (11) repräsentieren und zweite Frequenzen des jeweiligen Leistungsspektrums relative Geschwindigkeiten der Objekte (61, 62) in Bezug zu den Empfangsantennen (11) repräsentieren,
- für das jeweilige Leistungsspektrum ein Frequenzpaar auszuwählen, wobei die ausgewählten Frequenzpaare der Leistungsspektren (10) jeweils eine Frequenz der ersten Frequenzen, die in einem ersten Frequenzbereich liegt, und eine Frequenz der zweiten Frequenzen, die in einem zweiten Frequenzbereich liegt, umfassen und der erste Frequenzbereich einen Bereich der Abstände und der zweite Frequenzbereich einen Bereich der relativen Geschwindigkeiten repräsentiert und das jeweilige Leistungsspektrum zumindest eine Phaseninformation des ausgewählten Frequenzpaares des jeweiligen Leistungsspektrums umfasst,
- Pixelwerte von Pixeln eines Bildes (1001) in Abhängigkeit von den Phaseninformationen der ausgewählten Frequenzpaare zu berechnen,
- unter Verwendung des Bildes (1001) als Eingabe für das neuronale Netz (1) mithilfe des neuronalen Netzes (1) eine Ausgabe (800) des neuronalen Netzes (1) zu berechnen und anhand der Ausgabe (800) eine Anzahl von Objekten einer Teilmenge der Objekte (61, 62) zu ermitteln, die jeweils einen Abstand in Bezug zu dem Radarsystem (3), der innerhalb des Bereichs der Abstände liegt, und eine relative Geschwindigkeit in Bezug zu dem Radarsystem (3), die innerhalb des Bereichs der relativen Geschwindigkeiten liegt, aufweisen.

2. Radarsystem (3) nach Anspruch 1, wobei die Auswerteeinheit (4) eingerichtet ist, in Abhängigkeit von den Empfangssignalen (110) und der Anzahl der Objekte der Teilmenge eine Schätzung von Winkeln der Objekte (61, 62) der Teilmenge in Bezug zu den Empfangsantennen (11) durchzuführen, wobei die Auswerteeinheit (4) vorzugsweise eingerichtet ist, den MUSIC- oder den ESPRIT-Algorithmus zur Durchführung der Winkelschätzung durchzuführen.

3. Radarsystem (3) nach Anspruch 1 oder 2, wobei die Auswerteeinheit (4) eingerichtet ist,
- ein weiteres Leistungsspektrum in Abhängigkeit von den Phaseninformationen der ausgewählten Frequenzpaare zu erzeugen, wobei erste Frequenzen des weiteren Leistungsspektrums Werte eines Azimutwinkels in Bezug zu den Empfangsantennen (11) repräsentieren und zweite Frequenzen des weiteren Leistungsspektrums Werte eines Elevationswinkels in Bezug zu den Empfangsantennen (11) repräsentieren, wobei das weitere Leistungsspektrum einem jeweiligen weiteren Frequenzpaar, welches eine der ersten Frequenzen und eine der zweiten Frequenzen des weiteren Leistungsspektrums umfasst, eine Intensitätsinformation und eine Phaseninformation zuordnet,
- die Pixelwerte der Pixel in Abhängigkeit von den Phaseninformationen der weiteren Frequenzpaare zu bestimmen, wobei dem jeweiligen weiteren Frequenzpaar ein jeweiliger Pixel der Pixel zugeordnet ist.

4. Radarsystem (3) nach Anspruch 3, wobei die Auswerteeinheit (4) eingerichtet ist, die Intensitätsinformation und die Phaseninformation des jeweiligen weiteren Frequenzpaars mithilfe einer komplexen Zahl bereitzustellen, wobei die komplexe Zahl einen Realteil und einen Imaginärteil umfasst, und die Auswerteeinheit (4) eingerichtet ist, für den jeweiligen Pixel, der dem jeweiligen weiteren Frequenzpaar zugeordnet ist, einen jeweiligen Satz von Pixelwerten zu bestimmen, wobei der jeweilige Satz von Pixelwerten einen ersten Pixelwert, der von dem Realteil der jeweiligen komplexen Zahl abhängt, und einen zweiten Pixelwert, der von dem Imaginärteil der jeweiligen komplexen Zahl abhängt, umfasst.

5. Radarsystem (3) nach Anspruch 4, wobei der Satz von Pixelwerten des jeweiligen Pixels einen dritten Pixelwert umfasst, der gleich einem Phasenwert desjenigen weiteren Frequenzpaares ist, welches dem jeweiligen Pixel zugeordnet ist.

6. Radarsystem (3) nach Anspruch 4 oder 5, wobei der Satz von Pixelwerten des jeweiligen Pixels einen vierten Pixelwert umfasst, der gleich einem Betrag derjenigen komplexen Zahl ist, die demjenigen weiteren Frequenzpaar zugeordnet ist, welches dem jeweiligen Pixel zugeordnet ist.

7. Radarsystem (3) nach Anspruch 4, 5 oder 6, wobei das neuronale Netz (1) Verbindungsgewichte aufweist, die eine Stärke von Verbindungen zwischen Neuronen des neuronalen Netzes (1) angeben, und zumindest ein Teil der Verbindungsgewichte in Form von komplexen Werten ausgebildet sind.

8. Fahrzeug, aufweisend ein Radarsystem (3) nach einer der vorhergehenden Ansprüche.

9. Verfahren zur Erfassung von Objekten (61, 62) in einer Umgebung eines Fahrzeugs mithilfe eines Radarsystems (3) mit einer Auswerteeinheit (4) und mithilfe eines trainierten neuronalen Netzes (1) der Auswerteeinheit (4), das Verfahren umfassend:
- Generieren von Leistungsspektren (10) in Abhängigkeit von mittels Empfangsantennen (11) erzeugten Empfangssignalen, wobei erste Frequenzen des jeweiligen Leistungsspektrums Abstände der Objekte (61, 62) in Bezug zu den Empfangsantennen (11) repräsentieren und zweite Frequenzen des jeweiligen Leistungsspektrums relative Geschwindigkeiten der Objekte (61, 62) in Bezug zu den Empfangsantennen (11) repräsentieren,
- Auswählen eines Frequenzpaares für das jeweilige Leistungsspektrum, wobei die ausgewählten Frequenzpaare der Leistungsspektren (10) jeweils eine Frequenz der ersten Frequenzen, die in einem ersten Frequenzbereich liegt, und eine Frequenz der zweiten Frequenzen, die in einem zweiten Frequenzbereich liegt, umfassen und der erste Frequenzbereich einen Bereich der Abstände und der zweite Frequenzbereich einen Bereich der relativen Geschwindigkeiten repräsentiert und das jeweilige Leistungsspektrum zumindest eine Phaseninformation des ausgewählten Frequenzpaares des jeweiligen Leistungsspektrums umfasst,
- Berechnen von Pixelwerten von Pixeln eines Bildes (1001) in Abhängigkeit von den Phaseninformationen der ausgewählten Frequenzpaare,
- Berechnen einer Ausgabe (800) des neuronalen Netzes (1) mithilfe des neuronalen Netzes (1) unter Verwendung des Bildes (1001) als Eingabe für das neuronale Netz,
- Ermitteln einer Anzahl von Objekten einer Teilmenge der Objekte (61, 62), die jeweils einen Abstand in Bezug zu dem Radarsystem (3), der innerhalb des Bereichs der Abstände liegt, und eine relative Geschwindigkeit in Bezug zu dem Radarsystem (3), die innerhalb des Bereichs der relativen Geschwindigkeiten liegt, aufweisen.

10. Verfahren nach Anspruch 9, wobei das Verfahren weiterhin umfasst:
- Erzeugen von Trainingsdaten, die Trainingsbilder und Zieldatensätze umfassen, wobei die Trainingsbilder in Abhängigkeit von Trainingsempfangssignalen generiert werden,
- Eingeben der Trainingsbilder in das neuronale Netzwerk und Empfangen von mithilfe des neuronalen Netzes (1) erzeugten Trainingsausgabedatensätzen,
- Berechnen eines Wertes einer Verlustfunktion in Abhängigkeit von den Zieldatensätzen und den Trainingsausgabedatensätzen,
- Adaptieren von Werten von Parametern des neuronalen Netzes (1) in Abhängigkeit von dem Wert der Verlustfunktion.

11. Computerprogrammprodukt mit von einem Prozessor ausführbaren Instruktionen, wobei die Ausführung der Instruktionen den Prozessor zur Durchführung des Verfahrens gemäß des Anspruches 9 oder 10 veranlasst.
